# EUROPEAN PATENT APPLICATION

(11) **EP 4 836 273 A1**
(43) Date of publication of application: **04.11.2026**
(21) Application number: 24912527.9
(22) Date of filing: 17.12.2024
(51) Int. Cl.: H02M 3/28

(54) **POWER CONVERSION DEVICE**

(30) Priority: 27.12.2023 JP 2023221565
(71) Applicant: Panasonic Intellectual Property Management Co., Ltd., Kadoma-shi, Osaka 571-0057 (JP)
(72) Inventor: HANAMURA, Kenji, kadoma-shi, Osaka 571-0057 (JP); MATSUI, Ryoji, kadoma-shi, Osaka 571-0057 (JP); HIROTA, Shogo, kadoma-shi, Osaka 571-0057 (JP); MATSUMOTO, Kosuke, kadoma-shi, Osaka 571-0057 (JP)
(74) Representative: Appelt, Christian W.
(86) International application number: PCT/JP2024/044604
(87) International publication number: WO 2025/142638

(57) **Abstract**

In a DAB converter, when stepping up and transmitting power from a first DC unit (E1, Ca) to a second DC unit (E2, Cb), a control circuit (13) performs control such that a second bridge circuit (12) includes: a first period in which both ends of a secondary winding (n2) of an isolation transformer (TR1) are short-circuited within the second bridge circuit (12); and a second period in which the secondary winding (n2) of the isolation transformer (TR1) is electrically connected to the second DC section (E2, Cb). The control circuit (13) generates: a first pattern in which a seventh switching element (Q7) is turned off to transition from the first period to the second period; a second pattern in which a fifth switching element (Q5) is turned off to transition from the first period to the second period; a third pattern in which a sixth switching element (Q6) is turned off to transition from the first period to the second period; and a fourth pattern in which an eighth switching element (Q8) is turned off to transition from the first period to the second period.

## Description

### TECHNICAL FIELD

The present disclosure relates to a power conversion device that converts direct-current power into direct-current power of a different voltage.

### BACKGROUND ART

Power conditioners used in photovoltaic power generation systems and vehicle to home (V2H) systems are required to achieve high power conversion efficiency. V2H systems are capable of charging and discharging between a storage battery installed in an electric vehicle (e.g., EV, PHEV) and a commercial power network or a domestic load. For example, power generated by a residential photovoltaic system can be used to charge the storage battery of an electric vehicle. Furthermore, the storage battery installed in an electric vehicle can be utilized for peak shifting of domestic loads or for backup purposes. DC/DC converters used in V2H systems are required to feature high efficiency and galvanic isolation, as well as a wide voltage range. This is because the voltage of storage batteries installed in electric vehicles varies significantly depending on the vehicle models. One type of DC/DC converters that meets these requirements is a dual active bridge (DAB) converter.

In general DAB converters, an increase in loss occurs due to hard switching when the potential difference between the input and output is large, and an increase in loss also occurs due to the flow of reactive current unrelated to power transmission. Regarding this, for example, a DAB converter has been proposed (see, for example, Patent Literature 1) that performs step-up or step-down conversion using a phase-shift method while turning off all pulse width modulation (PWM) signals input to one of the legs of a bridge circuit consisting of four switching elements connected in a bridge configuration.

### RELATED-ART LITERATURE

### PATENT LITERATURE

Patent Literature 1: WO 16/125373

### SUMMARY OF INVENTION

### TECHNICAL PROBLEM

In the bridge circuit on the secondary side of the proposed DAB converter, losses become non-uniform between the switching elements that are kept entirely off and those used for phase-shift control. Therefore, heat generation also becomes non-uniform, leading to an increase in the size of cooling members (e.g., a heat sink) for the switching elements. Furthermore, the variation in service life among the switching elements increases.

The present disclosure addresses the above-described issue, and a purpose thereof is to provide a technology for making losses uniform among switching elements included in a DAB converter.

### SOLUTION TO PROBLEM

In order to address the aforementioned issue, one embodiment of the present disclosure relates to a power conversion device including: a first bridge circuit that has a first leg in which a first switching element and a second switching element are connected in series and a second leg in which a third switching element and a fourth switching element are connected in series, the first leg and the second leg being connected in parallel to a first DC section; a second bridge circuit that has a third leg in which a fifth switching element and a sixth switching element are connected in series and a fourth leg in which a seventh switching element and an eighth switching element are connected in series, the third leg and the fourth leg being connected in parallel to a second DC section; an isolation transformer that is connected between the first bridge circuit and the second bridge circuit; and a control circuit that controls the first switching element to the eighth switching element. The control circuit, when stepping up and transmitting power from the first DC section to the second DC section, performs control such that the second bridge circuit includes: a first period in which both ends of the secondary winding of the isolation transformer are short-circuited within the second bridge circuit; and a second period in which the secondary winding of the isolation transformer is electrically connected to the second DC section; and generates: a first pattern in which the seventh switching element conducting in a forward direction is turned off to transition from the first period to the second period; a second pattern in which the fifth switching element conducting in the forward direction is turned off to transition from the first period to the second period; a third pattern in which the sixth switching element conducting in the forward direction is turned off to transition from the first period to the second period; and a fourth pattern in which the eighth switching element conducting in the forward direction is turned off to transition from the first period to the second period.

### ADVANTAGEOUS EFFECTS OF INVENTION

According to the present disclosure, losses among switching elements included in a DAB converter can be made uniform.

### BRIEF DESCRIPTION OF DRAWINGS

[Fig. 1] Fig. 1 is a diagram for explaining a configuration of a power conversion device according to an embodiment.
[Figs. 2] Figs. 2A to 2C are diagrams for explaining an operation state according to the first comparative example of the power conversion device.
[Figs. 3] Figs. 3A to 3B are diagrams for explaining a current flow in a step-down operation according to the second comparative example of the power conversion device.
[Fig. 4] Fig. 4 is a diagram for explaining switching patterns of first to eighth switching elements during a step-down operation according to the second comparative example of the power conversion device.
[Figs. 5] Figs. 5A to 5B are diagrams for explaining a current flow in a step-up operation according to the second comparative example of the power conversion device.
[Fig. 6] Fig. 6 is a diagram for explaining switching patterns of the first to eighth switching elements during a step-up operation according to the second comparative example of the power conversion device.
[Fig. 7] Fig. 7 is a diagram for showing switching patterns of first to eighth switching elements and an example of transition of a transformer current during a step-down operation according to an exemplary embodiment of the power conversion device.
[Figs. 8] Figs. 8A to 8D are diagrams for explaining a first example of switching patterns and current flows in a step-down operation according to the exemplary embodiment of the power conversion device (Part 1).
[Figs. 9] Figs. 9A to 9D are diagrams for explaining a first example of switching patterns and current flows in a step-down operation according to the exemplary embodiment of the power conversion device (Part 2).
[Figs. 10] Figs. 10A to 10D are diagrams for explaining a second example of switching patterns and current flows in a step-down operation according to the exemplary embodiment of the power conversion device (Part 1).
[Figs. 11] Figs. 11A to 11D are diagrams for explaining a second example of switching patterns and current flows in a step-down operation according to the exemplary embodiment of the power conversion device (Part 2).
[Figs. 12] Figs. 12A to 12D are diagrams for explaining a third example of switching patterns and current flows in a step-down operation according to the exemplary embodiment of the power conversion device (Part 1).
[Figs. 13] Figs. 13A to 13D are diagrams for explaining a third example of switching patterns and current flows in a step-down operation according to the exemplary embodiment of the power conversion device (Part 2).
[Fig. 14] Fig. 14 is a diagram showing switching patterns of first to eighth switching elements during reverse transmission and an example of transition of a transformer current during a step-down operation according to the exemplary embodiment of the power conversion device.
[Fig. 15] Fig. 15 is a diagram showing switching patterns of first to eighth switching elements and an example of transition of a transformer current during a step-up operation according to the exemplary embodiment of the power conversion device.
[Fig. 16] Figs. 16A to 16D are diagrams for explaining a first example of switching patterns and current flows in a step-up operation according to the exemplary embodiment of the power conversion device (Part 1).
[Fig. 17] Figs. 17A to 17D are diagrams for explaining a first example of switching patterns and current flows in a step-up operation according to the exemplary embodiment of the power conversion device (Part 2).
[Fig. 18] Figs. 18A to 18D are diagrams for explaining a second example of switching patterns and current flows in a step-up operation according to the exemplary embodiment of the power conversion device (Part 1).
[Fig. 19] Figs. 19A to 19D are diagrams for explaining a second example of switching patterns and current flows in a step-up operation according to the exemplary embodiment of the power conversion device (Part 2).
[Fig. 20] Fig. 20 is a diagram showing Specific Example 1 in which switching patterns of first to eighth switching elements are periodically generated during the step-up operation according to the exemplary embodiment of the power conversion device.
[Fig. 21] Fig. 21 is a diagram showing Specific Example 2 in which switching patterns of the first to eighth switching elements are irregularly generated during the step-up operation according to the exemplary embodiment of the power conversion device.
[Fig. 22] Figs. 22A to 22D are diagrams for explaining a third example of switching patterns and current flows in the step-up operation according to the exemplary embodiment of the power conversion device (Part 1).
[Fig. 23] Figs. 23A to 23D are diagrams for explaining a third example of switching patterns and current flows in the step-up operation according to the exemplary embodiment of the power conversion device (Part 2).
[Fig. 24] Fig. 24 is a diagram showing switching patterns of the first to eighth switching elements during reverse transmission and an example of transition of a transformer current during the step-up operation according to the exemplary embodiment of the power conversion device.
[Fig. 25] Fig. 25 is a diagram showing switching patterns of the first to eighth switching elements and an example of transition of a transformer current during a step-up/step-down operation according to the exemplary embodiment of the power conversion device.
[Figs. 26] Fig. 26A is a diagram schematically illustrating a relationship between a duty ratio and transmitted power when no step-up/step-down mode is provided. Fig. 26B is a diagram schematically illustrating a relationship between a duty ratio and transmitted power when a step-up/step-down mode is provided.
[Fig. 27] Fig. 27 is a diagram showing a configuration example of a control circuit.
[Figs. 28] Figs. 28A to 28B are diagrams showing, in graphs, an example of variables and constants of a theoretical formula for calculating a synchronous rectification period.
[Figs. 29] Figs. 29A to 29D are diagrams for explaining yet another example of switching patterns and current flows in a step-down operation according to the exemplary embodiment of the power conversion device (Part 1).
[Figs. 30] Figs. 30A to 30D are diagrams for explaining yet another example of switching patterns and current flows in a step-down operation according to the exemplary embodiment of the power conversion device (Part 2). Description of Embodiments

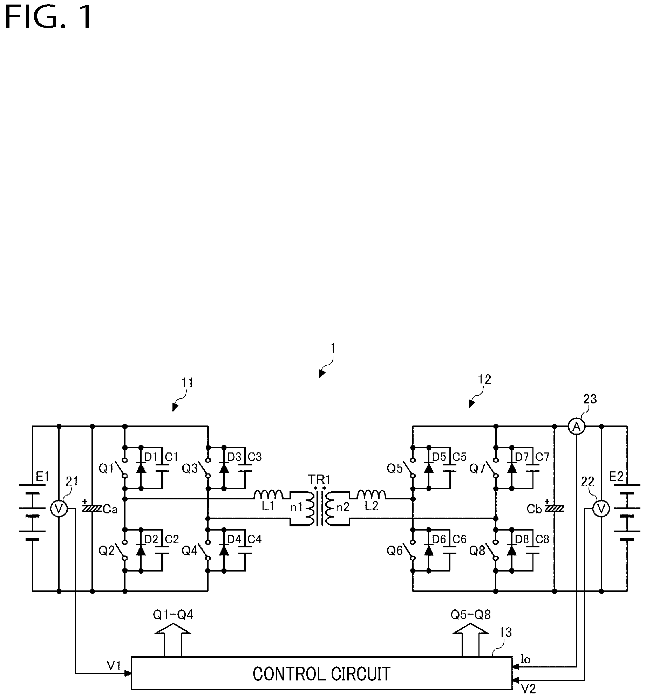

Fig. 1 is a diagram for explaining a configuration of a power conversion device 1 according to an embodiment. The power conversion device 1 is an isolated bidirectional DC/DC converter (DAB converter) that converts DC power supplied from a first DC power supply E1 and transmits the converted power to a second DC power supply E2. Furthermore, the power conversion device 1 converts DC power supplied from the second DC power supply E2 and transmits the converted power to the first DC power supply E1. The power conversion device 1 is capable of performing both step-down power transmission and step-up power transmission.

The first DC power supply E1 corresponds to, for example, a storage battery or an electric double-layer capacitor mounted on an EV, or a storage battery or an electric double-layer capacitor of a stationary type. The second DC power supply E2 corresponds to, for example, a DC bus connected to a commercial power system via an inverter. Other storage batteries, solar cells, fuel cells, and the like may be connected to the DC bus via other DC/DC converters.

The power conversion device 1 includes a primary-side capacitor Ca, a first bridge circuit 11, a first inductance L1, an isolation transformer TR1, a second inductance L2, a second bridge circuit 12, a secondary-side capacitor Cb, and a control circuit 13.

The primary-side capacitor Ca is connected in parallel with the first DC power supply E1. The secondary-side capacitor Cb is connected in parallel with the second DC power supply E2. For the primary-side capacitor Ca and the secondary-side capacitor Cb, for example, electrolytic capacitors are used. In the present specification, the first DC power supply E1 and the primary-side capacitor Ca are collectively referred to as a first DC section, and the second DC power supply E2 and the secondary-side capacitor Cb are collectively referred to as a second DC section.

The first bridge circuit 11 is a full-bridge circuit configured by connecting in parallel a first leg, in which a first switching element Q1 and a second switching element Q2 are connected in series, and a second leg, in which a third switching element Q3 and a fourth switching element Q4 are connected in series. The first bridge circuit 11 is connected in parallel with the first DC section, and a midpoint of the first leg and a midpoint of the second leg are connected to the respective ends of a primary winding n1 of the isolation transformer TR1. The first bridge circuit 11 can convert a primary-side DC voltage supplied from the first DC section into an AC voltage and output the converted voltage to the primary winding n1 of the isolation transformer TR1. Further, the first bridge circuit 11 can convert an AC voltage supplied from the primary winding n1 of the isolation transformer TR1 into a DC voltage and output the converted voltage to the first DC section.

The second bridge circuit 12 is a full-bridge circuit configured by connecting in parallel a third leg, in which a fifth switching element Q5 and a sixth switching element Q6 are connected in series, and a fourth leg, in which a seventh switching element Q7 and an eighth switching element Q8 are connected in series. The second bridge circuit 12 is connected in parallel with the second DC section, and a midpoint of the third leg and a midpoint of the fourth leg are connected to the respective ends of a secondary winding n2 of the isolation transformer TR1. The second bridge circuit 12 can convert a secondary-side DC voltage supplied from the second DC section into an AC voltage and output the converted voltage to the secondary winding n2 of the isolation transformer TR1. Further, the second bridge circuit 12 can convert an AC voltage supplied from the secondary winding n2 of the isolation transformer TR1 into a DC voltage and output the converted voltage to the second DC section.

In the first switching element Q1 to the eighth switching element Q8, a first diode D1 to an eighth diode D8 are formed or connected in anti-parallel, respectively. Further, in the first switching element Q1 to the eighth switching element Q8, a first capacitance C1 to an eighth capacitance C8 are formed or connected in parallel, respectively.

For the first switching element Q1 to the eighth switching element Q8, for example, a metal-oxide-semiconductor field-effect transistor (MOSFET) or an insulated gate bipolar transistor (IGBT) can be used. When MOSFETs are used for the first switching element Q1 to the eighth switching element Q8, parasitic diodes respectively formed between the drains and sources of the first switching element Q1 to the eighth switching element Q8 are used as the first diode D1 to the eighth diode D8, or external diode elements are respectively connected as the first diode D1 to the eighth diode D8. Further, parasitic capacitances respectively formed between the drains and sources of the first switching element Q1 to the eighth switching element Q8 are used as the first capacitance C1 to the eighth capacitance C8, or external capacitors are respectively connected as the first capacitance C1 to the eighth capacitance C8 between the drains and sources of the first switching element Q1 to the eighth switching element Q8.

When IGBTs are used for the first switching element Q1 to the eighth switching element Q8, external diode elements are respectively connected as the first diode D1 to the eighth diode D8 between the collectors and emitters of the first switching element Q1 to the eighth switching element Q8. Further, external capacitors are respectively connected as the first capacitance C1 to the eighth capacitance C8 between the collectors and emitters of the first switching element Q1 to the eighth switching element Q8, or parasitic capacitances respectively formed between the collectors and emitters of the first switching element Q1 to the eighth switching element Q8 are used as the first capacitance C1 to the eighth capacitance C8.

Since a MOSFET does not generate a tail current compared to an IGBT, switching loss during turn-off can be reduced to suppress heat generation, thereby allowing a cooler (for example, a heat sink) to be downsized. Furthermore, since high-frequency driving is possible compared to an IGBT, passive components (for example, a transformer and a capacitor) can be downsized. However, a MOSFET usually has a larger on-resistance than an IGBT.

In recent years, switching elements using wide-gap semiconductors (for example, silicon carbide (SiC), gallium nitride (GaN), gallium oxide (Ga2O3), and diamond (C)) have become widespread as switching elements with high breakdown voltage and low loss. In the present embodiment, it is assumed that SiC-MOSFETs are used for the first switching element Q1 to the eighth switching element Q8. Since SiC-MOSFETs have a higher breakdown voltage than Si-MOSFETs, SiC-MOSFETs can be downsized, and the on-resistance per unit area can be reduced.

The isolation transformer TR1 is connected between an AC terminal of the first bridge circuit 11 and an AC terminal of the second bridge circuit 12. The isolation transformer TR1 converts the output voltage from the first bridge circuit 11 connected to the primary winding n1 according to the turn ratio of the primary winding n1 to the secondary winding n2, and outputs the converted voltage to the second bridge circuit 12 connected to the secondary winding n2. Further, the isolation transformer TR1 converts the output voltage from the second bridge circuit 12 connected to the secondary winding n2 according to the turn ratio of the secondary winding n2 to the primary winding n1, and outputs the converted voltage to the first bridge circuit 11 connected to the primary winding n1.

The first inductance L1 is connected or formed in series between the AC terminal of the first bridge circuit 11 and the primary winding n1 of the isolation transformer TR1. The second inductance L2 is connected or formed in series between the AC terminal of the second bridge circuit 12 and the secondary winding n2 of the isolation transformer TR1. In the example shown in Fig. 1, the first inductance L1 is configured by a reactor element connected between the midpoint of the first leg of the first bridge circuit 11 and the primary winding n1 of the isolation transformer TR1. The second inductance L2 is configured by a reactor element connected between the midpoint of the third leg of the second bridge circuit 12 and the secondary winding n2 of the isolation transformer TR1.

Note that the first inductance L1 may be configured by a leakage inductance of the primary winding n1 formed between the midpoint of the first leg of the first bridge circuit 11 and the primary winding n1 of the isolation transformer TR1. The second inductance L2 may be configured by a leakage inductance of the secondary winding n2 formed between the midpoint of the third leg of the second bridge circuit 12 and the secondary winding n2 of the isolation transformer TR1. Note that either one of the first inductance L1 and the second inductance L2 may be omitted.

The control circuit 13 executes the following control as basic control. When transmitting power from the first DC section to the second DC section (when discharging from the first DC power supply E1), the control circuit 13 controls the first switching element Q1 to the eighth switching element Q8 such that a current value detected by a current sensor 23 on the secondary side maintains a current command value. A voltage value detected by a first voltage sensor 21 on the primary side, a secondary-side voltage value detected by a second voltage sensor 22 on the secondary side, or a current value detected by a current sensor (not shown) on the primary side may be controlled as a target value.

Further, when transmitting power from the second DC section to the first DC section (when charging the first DC power supply E1), the control circuit 13 controls the first switching element Q1 to the eighth switching element Q8 such that a current value detected by a current sensor (not shown) on the primary side maintains a current command value. The voltage value detected by the first voltage sensor 21 on the primary side, the secondary-side voltage value detected by the second voltage sensor 22 on the secondary side, or the current value detected by the current sensor 23 on the secondary side may be controlled as a target value.

In this way, the DAB converter has a symmetrical configuration on the primary side and the secondary side and can transmitted power bidirectionally. Hereinafter, the operation of the power conversion device 1 will be described.

### (First comparative example)

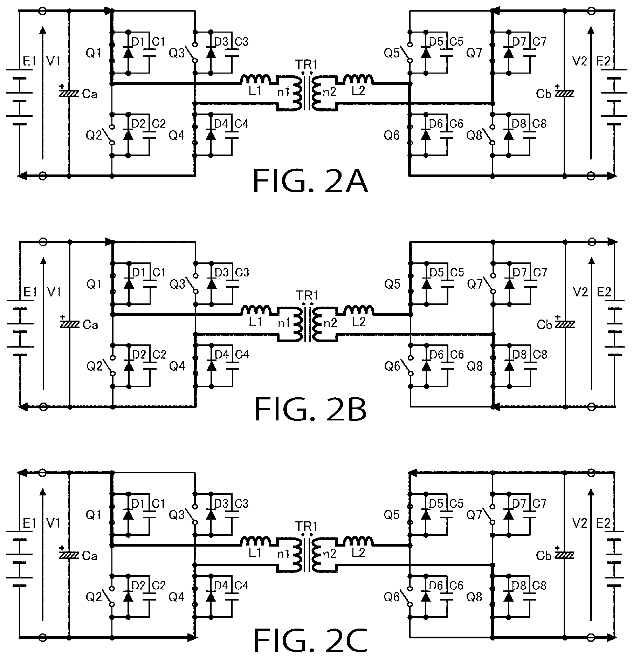

Figs. 2A to 2C are diagrams for explaining an operation state according to the first comparative example of the power conversion device 1. In a first state shown in Fig. 2A, the control circuit 13 controls the first switching element Q1, the fourth switching element Q4, the sixth switching element Q6, and the seventh switching element Q7 to be in an ON state and controls the second switching element Q2, the third switching element Q3, the fifth switching element Q5, and the eighth switching element Q8 to be in an OFF state. In this state, power is charged from the first DC power supply E1 to the first inductance L1, and power is charged from the second DC power supply E2 to the second inductance L2.

In a second state shown in Fig. 2B, the control circuit 13 controls the first switching element Q1, the fourth switching element Q4, the fifth switching element Q5, and the eighth switching element Q8 to be in an ON state and controls the second switching element Q2, the third switching element Q3, the sixth switching element Q6, and the seventh switching element Q7 to be in an OFF state. In this state, power from the first DC power supply E1, power accumulated in the first inductance L1, and power accumulated in the second inductance L2 are transmitted to the second DC power supply E2.

In a third state (not shown), the control circuit 13 controls the second switching element Q2, the third switching element Q3, the fifth switching element Q5, and the eighth switching element Q8 to be in an ON state and controls the first switching element Q1, the fourth switching element Q4, the sixth switching element Q6, and the seventh switching element Q7 to be in an OFF state. In this state, power is charged from the first DC power supply E1 to the first inductance L1, and power is charged from the second DC power supply E2 to the second inductance L2.

In a fourth state (not shown), the control circuit 13 controls the second switching element Q2, the third switching element Q3, the sixth switching element Q6, and the seventh switching element Q7 to be in an ON state and controls the first switching element Q1, the fourth switching element Q4, the fifth switching element Q5, and the eighth switching element Q8 to be in an OFF state. In this state, power from the first DC power supply E1, power accumulated in the first inductance L1, and power accumulated in the second inductance L2 are transmitted to the second DC power supply E2.

In the control according to the first comparative example, power from the second DC power supply E2 is charged into the second inductance L2 in the first state (see Fig. 2A) and the third state (not shown). In the subsequent second state (see Fig. 2B) and the fourth state (not shown), the power accumulated in the second inductance L2 is discharged to the second DC power supply E2. That is, a reactive current unrelated to power transmission flows on the secondary side. Wasteful loss occurs due to the flow of this reactive current.

Fig. 2C shows the current flow when the voltage of the first DC power supply E1 is significantly decreased relative to the voltage of the second DC power supply E2 in the second state shown in Fig. 2B. When the voltage of the second DC power supply E2 becomes higher than the voltage of the first DC power supply E1, the direction of the current is reversed, and the current flows back from the second DC power supply E2 to the first DC power supply E1. In this state, when the first switching element Q1 and the fourth switching element Q4 are turned off and the second switching element Q2 and the third switching element Q3 are turned on to transition to the next state, the second switching element Q2 and the third switching element Q3 undergo hard switching, and the first diode D1 of the first switching element Q1 and the fourth diode D4 of the fourth switching element Q4 perform recovery operations, resulting in increased loss.

### (Second comparative example)

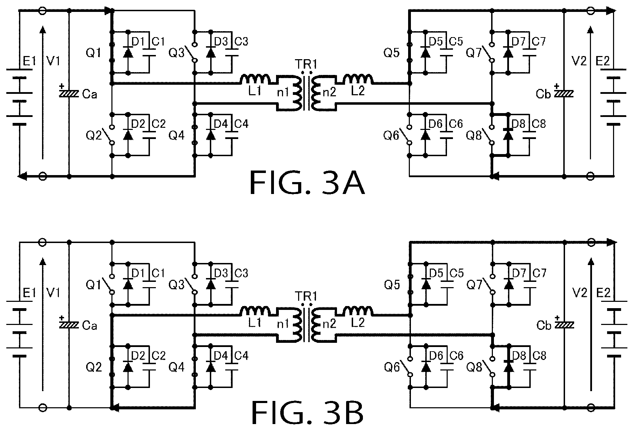

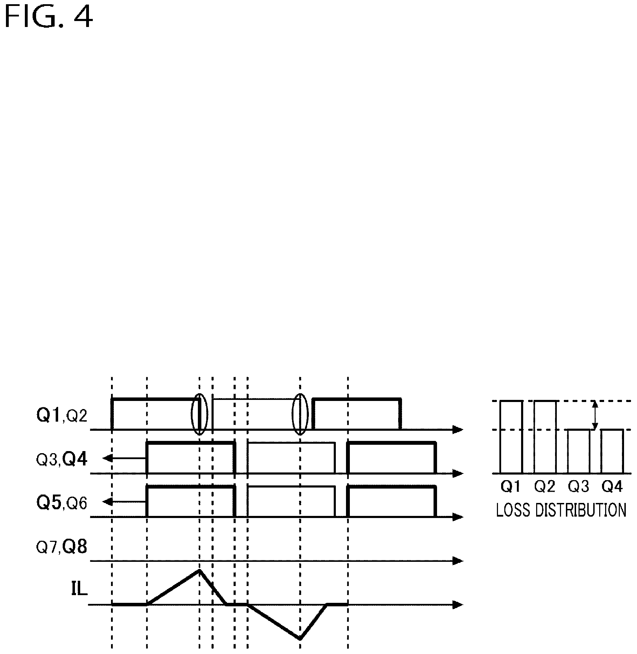

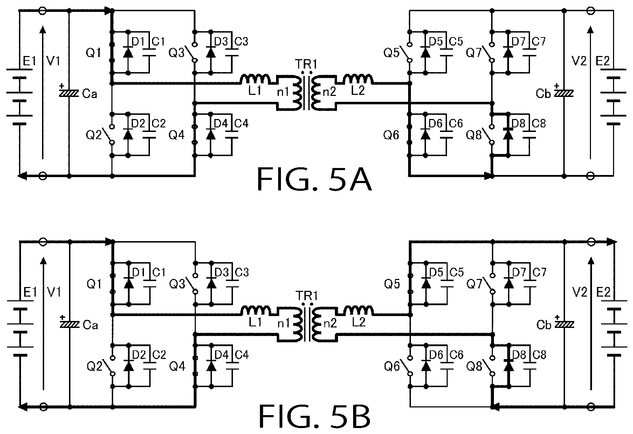

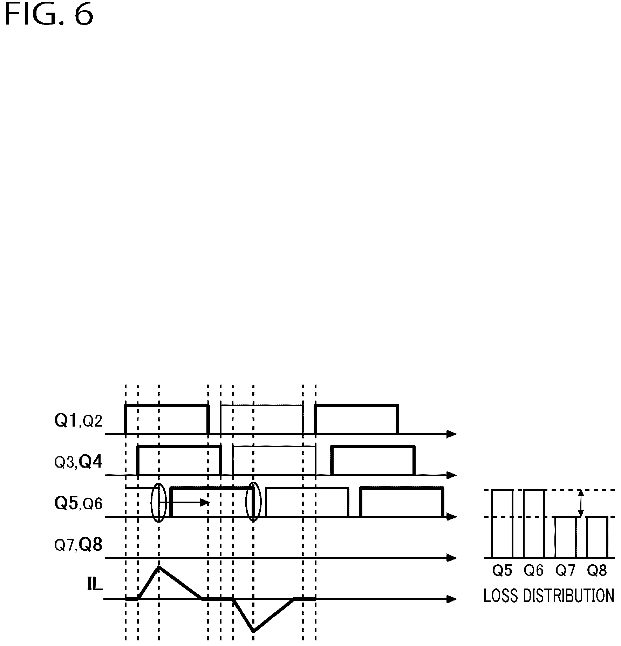

Figs. 3A to 3B are diagrams for explaining a current flow in a step-down operation according to the second comparative example of the power conversion device 1. Fig. 4 is a diagram for explaining switching patterns of the first switching element Q1 to the eighth switching element Q8 during the step-down operation according to the second comparative example of the power conversion device 1. Figs. 5A to 5B are diagrams for explaining a current flow in a step-up operation according to the second comparative example of the power conversion device 1. Fig. 6 is a diagram for explaining switching patterns of the first switching element Q1 to the eighth switching element Q8 during the step-up operation according to the second comparative example of the power conversion device 1.

In the second comparative example, a phase-shift method is adopted. The duty ratios of the first switching element Q1 to the sixth switching element Q6 are fixed at 50%, and the seventh switching element Q7 and the eighth switching element Q8 are maintained in an all-OFF state.

Fig. 3A shows a state in which power is transmitted from the first DC power supply E1 to the second DC power supply E2 (hereinafter referred to as a "transmission state"). Fig. 3B shows a state in which the first DC power supply E1 and the isolation transformer TR1 are disconnected, and power is transmitted from the first inductance L1 and the second inductance L2 to the second DC power supply E2 (hereinafter referred to as a "commutation state"). In the step-down operation, the voltage or current of the transmitted power is controlled based on the ratio between the transmission state and the commutation state. The higher the ratio of the commutation state, the lower the voltage or current of the transmitted power is controlled.

More specifically, as shown in Fig. 4, the phase of the first leg (first switching element Q1 and second switching element Q2) is fixed, the phase of the second leg (third switching element Q3 and fourth switching element Q4) is variable, and the phase difference between the first leg and the second leg is controlled by controlling the phase of the second leg. The third leg (the fifth switching element Q5 and the sixth switching element Q6) is controlled in synchronization with the second leg. When increasing power transmitted from the primary side to the secondary side, the control circuit 13 controls the phase difference to be smaller (shifts the phase of the second leg to the left), and when decreasing power transmitted from the primary side to the secondary side, the control circuit 13 controls the phase difference to be larger (shifts the phase of the second leg to the right).

Fig. 5A shows a state in which the isolation transformer TR1 and the second DC power supply E2 are disconnected, and power is accumulated in the first inductance L1 and the second inductance L2 from the first DC power supply E1 (hereinafter referred to as an "accumulation state"). Fig. 5B shows a transmission state in which power is transmitted from the first DC power supply E1, the first inductance L1, and the second inductance L2 to the second DC power supply E2. In the step-up operation, the voltage or current of the transmitted power is controlled based on the ratio between the transmission state and the accumulation state. The higher the ratio of the accumulation state, the higher the voltage or current of the transmitted power is controlled.

More specifically, as shown in Fig. 6, the phases of the first leg and the second leg are fixed, the phase of the third leg is variable, and the phase difference between the first and second legs and the third leg is controlled by controlling the phase of the third leg. When increasing power transmitted from the primary side to the secondary side, the control circuit 13 controls the phase difference to be larger (shifts the phase of the third leg to the right), and when decreasing power transmitted from the primary side to the secondary side, the control circuit 13 controls the phase difference to be smaller (shifts the phase of the third leg to the left).

In the second comparative example, since the seventh switching element Q7 and the eighth switching element Q8 are maintained in the all-OFF state, the current does not flow back from the second DC power supply E2 to the second inductance L2, the first inductance L1, and the first DC power supply E1. That is, no reactive current occurs due to the backflow of current from the second DC power supply E2, such as that illustrated in Fig. 2A of the first comparative example. Further, even if the voltage of the second DC power supply E2 becomes higher than the voltage of the first DC power supply E1 during the step-down operation, since the current does not flow back from the second DC power supply E2 to the first DC power supply E1, it is possible to suppress the next ON/OFF switching of the first switching element Q1 to the fourth switching element Q4 on the primary side from becoming hard switching.

As shown in Fig. 4, in the step-down operation of the second comparative example, the turn-off of the first switching element Q1 and the second switching element Q2 included in the first leg is a turn-off in the transmission state, and the turn-off of the third switching element Q3 and the fourth switching element Q4 included in the second leg is a turn-off in the commutation state. Since the turn-off in the transmission state represents a turn-off in a state involving a larger current flow, the turn-off loss of the first switching element Q1 and the second switching element Q2 included in the first leg is greater than that of the third switching element Q3 and the fourth switching element Q4 included in the second leg. As shown in Fig. 4, the turn-off of the first switching element Q1 and the second switching element Q2 is a turn-off that causes the absolute value of the current to change from increasing to decreasing, which results in a large switching loss.

As shown in Fig. 6, in the step-up operation of the second comparative example, the fourth leg is all OFF. Therefore, the switching loss of the fifth switching element Q5 and the sixth switching element Q6 included in the third leg is greater than the switching loss of the seventh switching element Q7 and the eighth switching element Q8 included in the fourth leg. As shown in Fig. 6, the turn-off of the fifth switching element Q5 and the sixth switching element Q6 is a turn-off that causes the absolute value of the current to change from increasing to decreasing, which results in a large switching loss.

### (Exemplary embodiment (Step-down))

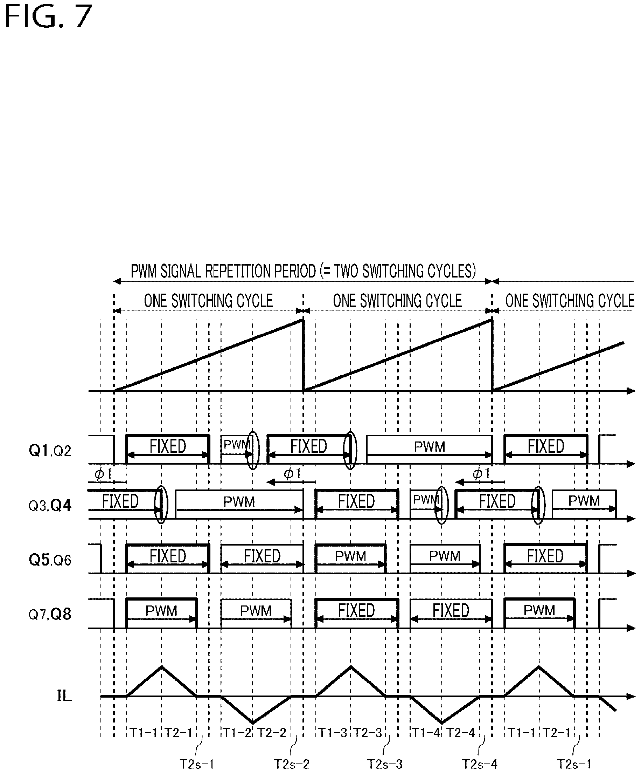

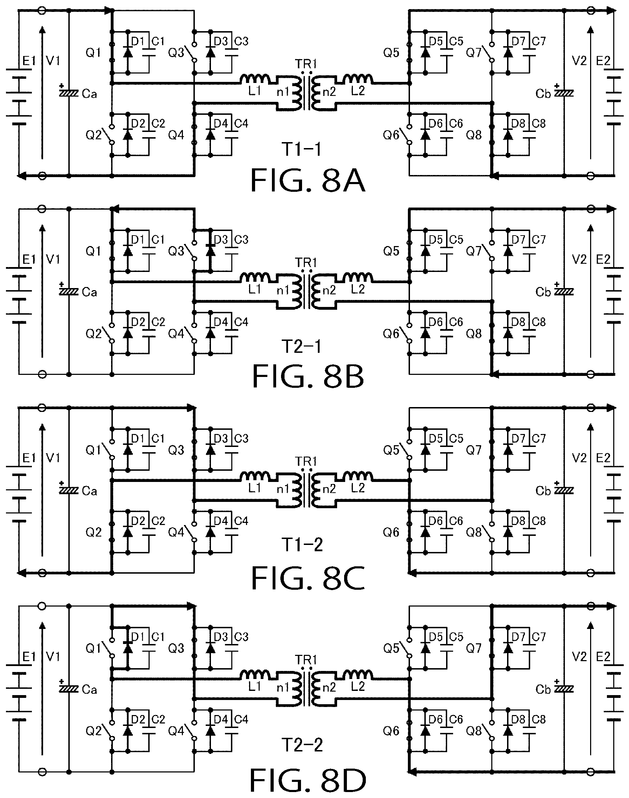

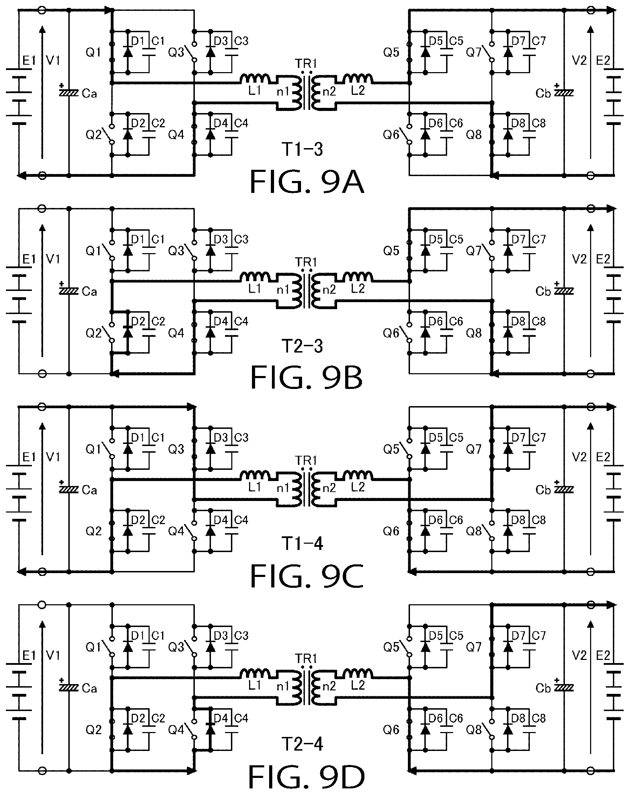

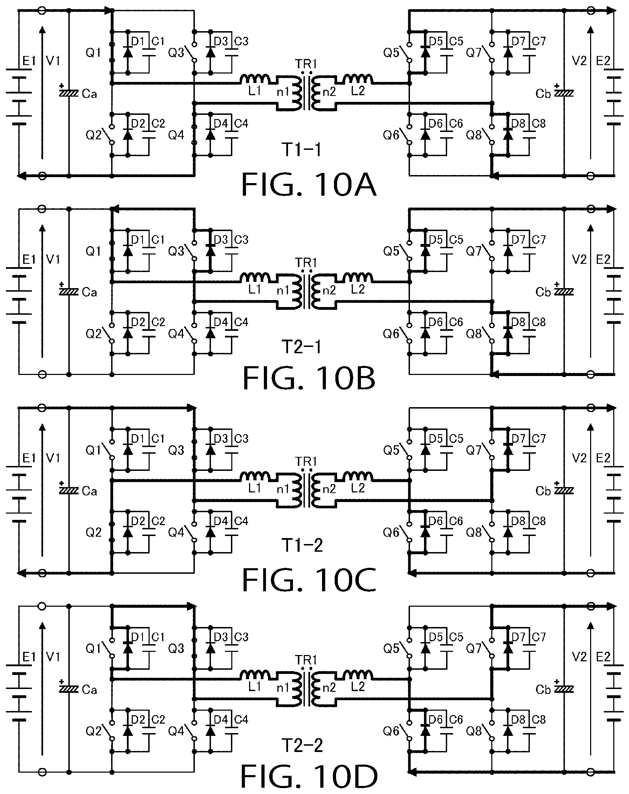

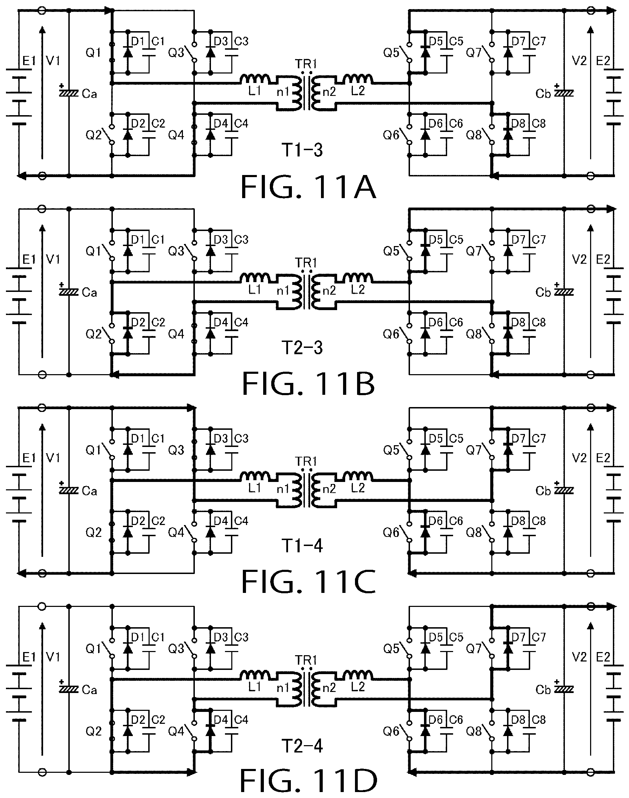

Fig. 7 is a diagram showing switching patterns of the first switching element Q1 to the eighth switching element Q8 and an example of transition of a transformer current IL during a step-down operation according to an exemplary embodiment of the power conversion device 1. The transformer current IL is a current flowing through the isolation transformer TR1. Figs. 8A to 8D are diagrams for explaining a first example of switching patterns and current flows in a step-down operation according to the exemplary embodiment of the power conversion device 1 (Part 1). Figs. 9A to 9D are diagrams for explaining a first example of switching patterns and current flows in a step-down operation according to the exemplary embodiment of the power conversion device 1 (Part 2). Figs. 10A to 10D are diagrams for explaining a second example of switching patterns and current flows in a step-down operation according to the exemplary embodiment of the power conversion device 1 (Part 1). Figs. 11A to 11D are diagrams for explaining the second example of switching patterns and current flows in a step-down operation according to the exemplary embodiment of the power conversion device 1 (Part 2).

The present exemplary embodiment uses a combination of PWM and phase-shift methods for control. When stepping down and transmitting power from the first DC section to the second DC section, the control circuit 13 performs control so as to include a first period T1 (step-down) and a second period T2 (step-up). The first period T1 (step-down) is a period that serves as a transmission state in which the first bridge circuit 11 establishes conduction between the first DC section and the primary winding n1 of the isolation transformer TR1 and in which the second bridge circuit 12 establishes conduction between the secondary winding n2 of the isolation transformer TR1 and the second DC section. The second period T2 (step-up) is a period that serves as a commutation state in which both ends of the primary winding n1 of the isolation transformer TR1 are short-circuited within the first bridge circuit 11 and in which the second bridge circuit 12 establishes conduction between the secondary winding n2 of the isolation transformer TR1 and the second DC section.

The control circuit 13 generates the first period T1 (step-down) and the second period T2 (step-down) using a first pattern (step-down) to a fourth pattern (step-down). The first example of switching patterns and current flows in the step-down operation shown in Figs. 8A to 8D and Figs. 9A to 9D is an example of performing synchronous rectification by controlling switching elements, which are to be controlled to be in a rectification state in the second bridge circuit 12, to an ON state. The second example of switching patterns and current flows in the step-down operation shown in Figs. 10A to 10D and Figs. 11A to 11D is an example of performing diode rectification by controlling switching elements, which are to be controlled to be in a rectification state in the second bridge circuit 12, to an OFF state.

In a first period T1-1 (step-down) in the first pattern (step-down), the first switching element Q1 and the fourth switching element Q4 are in the ON state, the fifth switching element Q5 and the eighth switching element Q8 are in the rectification state, and the second switching element Q2, the third switching element Q3, the sixth switching element Q6, and the seventh switching element Q7 are in the OFF state (see Fig. 8A and Fig. 10A).

In a second period T2-1 (step-down) in the first pattern (step-down), the first switching element Q1 is in the ON state, the third switching element Q3, the fifth switching element Q5, and the eighth switching element Q8 are in the rectification state, and the second switching element Q2, the fourth switching element Q4, the sixth switching element Q6, and the seventh switching element Q7 are in the OFF state (see Fig. 8B and Fig. 10B).

In the first pattern (step-down), the control circuit 13 transitions from the first period T1-1 (step-down) to the second period T2-1 (step-down) by turning off the fourth switching element Q4 conducting in a forward direction. In this case, "conducting in a forward direction" refers to a state in which current is flowing from the drain toward the source of the switching element or from the collector toward the emitter.

In a first period T1-2 (step-down) in the second pattern (step-down), the second switching element Q2 and the third switching element Q3 are in the ON state, the sixth switching element Q6 and the seventh switching element Q7 are in the rectification state, and the first switching element Q1, the fourth switching element Q4, the fifth switching element Q5, and the eighth switching element Q8 are in the OFF state (see Fig. 8C and Fig. 10C).

In a second period T2-2 (step-down) in the second pattern (step-down), the third switching element Q3 is in the ON state, the first switching element Q1, the sixth switching element Q6, and the seventh switching element Q7 are in the rectification state, and the second switching element Q2, the fourth switching element Q4, the fifth switching element Q5, and the eighth switching element Q8 are in the OFF state (see Fig. 8D and Fig. 10D).

In the second pattern (step-down), the control circuit 13 transitions from the first period T1-2 (step-down) to the second period T2-2 (step-down) by turning off the second switching element Q2 conducting in the forward direction.

In a first period T1-3 (step-down) in the third pattern (step-down), the first switching element Q1 and the fourth switching element Q4 are in the ON state, the fifth switching element Q5 and the eighth switching element Q8 are in the rectification state, and the second switching element Q2, the third switching element Q3, the sixth switching element Q6, and the seventh switching element Q7 are in the OFF state (see Fig. 9A and Fig. 11A).

In a second period T2-3 (step-down) in the third pattern (step-down), the fourth switching element Q4 is in the ON state, the second switching element Q2, the fifth switching element Q5, and the eighth switching element Q8 are in the rectification state, and the first switching element Q1, the third switching element Q3, the sixth switching element Q6, and the seventh switching element Q7 are in the OFF state (see Fig. 9B and Fig. 11B).

In the third pattern (step-down), the control circuit 13 transitions from the first period T1-3 (step-down) to the second period T2-3 (step-down) by turning off the first switching element Q1 conducting in the forward direction.

In a first period T1-4 (step-down) in the fourth pattern (step-down), the second switching element Q2 and the third switching element Q3 are in the ON state, the sixth switching element Q6 and the seventh switching element Q7 are in the rectification state, and the first switching element Q1, the fourth switching element Q4, the fifth switching element Q5, and the eighth switching element Q8 are in the OFF state (see Fig. 9C and Fig. 11C).

In a second period T2-4 (step-down) in the fourth pattern (step-down), the second switching element Q2 is in the ON state, the fourth switching element Q4, the sixth switching element Q6, and the seventh switching element Q7 are in the rectification state, and the first switching element Q1, the third switching element Q3, the fifth switching element Q5, and the eighth switching element Q8 are in the OFF state (see Fig. 9D and Fig. 11D).

In the fourth pattern (step-down), the control circuit 13 transitions from the first period T1-4 (step-down) to the second period T2-4 (step-down) by turning off the third switching element Q3 conducting in the forward direction.

The control circuit 13 supplies different drive signals to the first switching element Q1 to the fourth switching element Q4 included in the first bridge circuit 11, respectively. More specifically, the control circuit 13 fixes the duty cycle (duty ratio) of the drive signals supplied to one diagonal pair of switching elements (e.g., the first switching element Q1 and the fourth switching element Q4) among the first switching element Q1 to the fourth switching element Q4 at 50%, regardless of the amount of power transmission, excluding the dead time. The control circuit 13 changes a first phase difference φ1 between the two drive signals supplied to the respective one diagonal pair of switching elements within a range of 0° to 180° according to the amount of power transmission, excluding the dead time. The first phase difference φ1 is 0° when turn-on timings of the two drive signals respectively supplied to the diagonal pair of switching elements are simultaneous.

The control circuit 13 changes the duty cycle of drive signals supplied to the other diagonal pair of switching elements (e.g., the second switching element Q2 and the third switching element Q3) among the first switching element Q1 to the fourth switching element Q4 within a range of 0% to 100% according to the amount of power transmission, excluding the dead time. More specifically, the control circuit 13 decreases the duty cycle of a drive signal supplied to one of the other diagonal pair of switching elements from 50% by an amount corresponding to the first phase difference φ1, excluding the dead time. At the same time, the control circuit 13 increases the duty cycle of a drive signal supplied to the other switching element of the other diagonal pair of switching elements from 50% by an amount corresponding to the first phase difference φ1, excluding the dead time.

In this way, in the first bridge circuit 11, the duty cycle and the phase shift amount are controlled using the same control variable according to the amount of power transmission. As a result, as shown in Fig. 7, the turning-off that reverses the increase in the absolute value of the current can be distributed among the first switching element Q1 to the fourth switching element Q4, allowing the loss and heat generation to be distributed across the first switching element Q1 to the fourth switching element Q4. In the second comparative example shown in Fig. 4 above, loss and heat generation are concentrated on the first switching element Q1 and the second switching element Q2.

The control circuit 13 synchronizes turn-on timings of drive signals supplied to a diagonal pair of switching elements among the fifth switching element Q5 to the eighth switching element Q8. The control circuit 13 fixes the duty cycle of a drive signal supplied to one (e.g., the fifth switching element Q5) of one diagonal pair of switching elements (e.g., the fifth switching element Q5 and the eighth switching element Q8) to 50% regardless of the amount of power transmission, excluding the dead time. The control circuit 13 changes the duty cycle of a drive signal supplied to the other one (e.g., the eighth switching element Q8) of the diagonal pair of switching elements within a range of 50% or less according to the amount of power transmission, excluding the dead time. The control circuit 13 swaps settings of the duty cycles of the drive signals supplied to the pair of switching elements at the start of each switching cycle.

In this way, in the second bridge circuit 12, by fixing the phase and controlling the duty cycle according to the amount of power transmission, switching between a step-down mode and a step-up/step-down mode described later can be performed smoothly.

As shown in Fig. 7 above, the control circuit 13 generates each of the first pattern (step-down) to the fourth pattern (step-down) twice for every four switching cycles. In this case, the respective numbers of occurrences of the first pattern (step-down) to the fourth pattern (step-down) are the same. Thereby, switching loss occurring on the primary side in the step-down operation can be evenly allocated to the first switching element Q1 to the fourth switching element Q4, and heat generation can be distributed.

The control circuit 13 may perform control such that the respective numbers of occurrences of the first pattern (step-down) to the fourth pattern (step-down) differ from each other. For example, the control circuit 13 may generate the first pattern (step-down) and the second pattern (step-down) four times each, and generate the third pattern (step-down) and the fourth pattern (step-down) twice each in three switching cycles. Even in this case, loss can be distributed to some extent, and a peak of heat generation on the primary side can be suppressed compared with the control shown in the second comparative example.

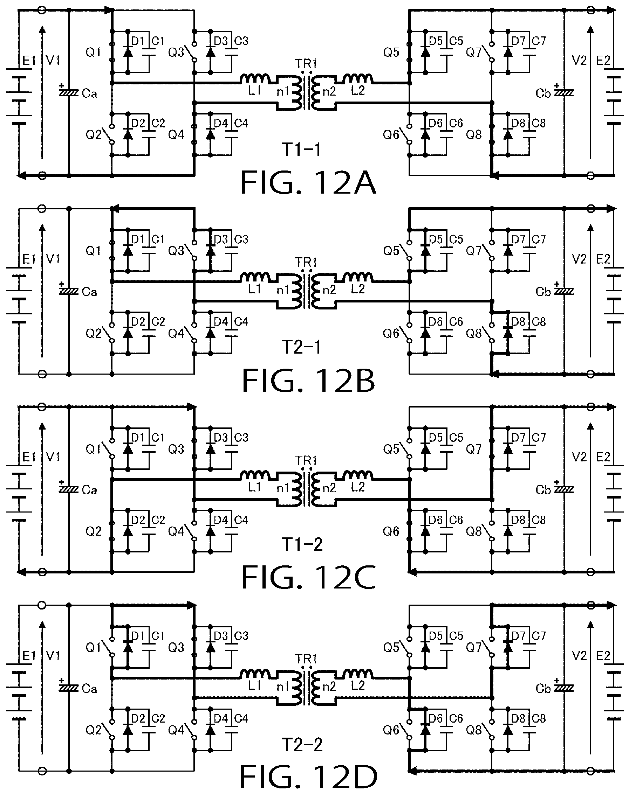

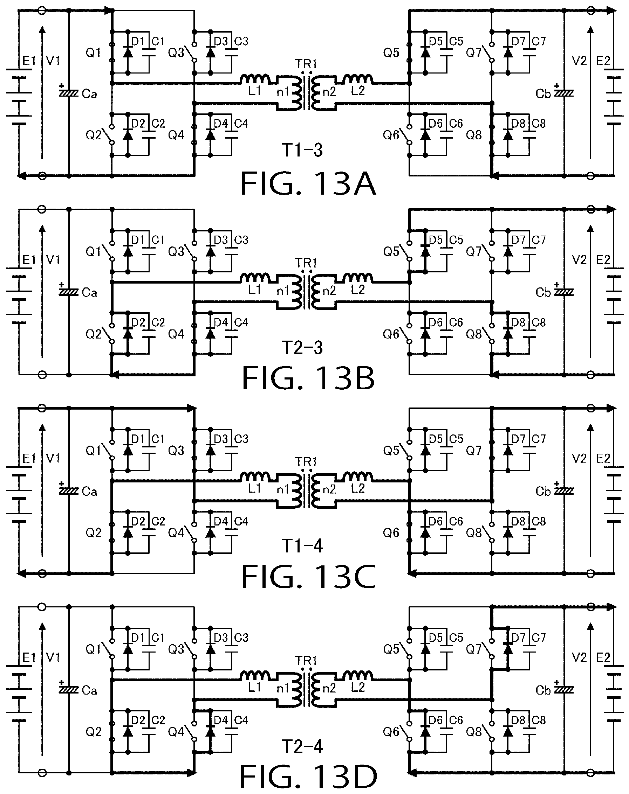

Figs. 12A to 12D are diagrams for explaining the third example of switching patterns and current flows in a step-down operation according to the exemplary embodiment of the power conversion device 1 (Part 1). Figs. 13A to 13D are diagrams for explaining the third example of switching patterns and current flows in a step-down operation according to the exemplary embodiment of the power conversion device 1 (Part 2).

In the third example (step-down), the control circuit 13 performs synchronous rectification by controlling switching elements included in the second bridge circuit 12, which are to be in the rectification state, to the ON state during the first period T1 (step-down). During the second period T2 (step-down), the control circuit 13 performs diode rectification by controlling switching elements included in the second bridge circuit 12, which are to be in the rectification state, to the OFF state. Since conduction loss by synchronous rectification is smaller than forward loss Vf by diode rectification, the third example (step-down) can reduce loss in the first period T1 (step-down) compared with the second example (step-down).

The switching pattern shown in Fig. 7 above represents control in which the first example (step-down) and the second example (step-down) are combined. In principle, during the second period T2 (step-down), the control circuit 13 performs synchronous rectification by controlling the diagonal pair of switching elements included in the second bridge circuit 12, which is to be in a rectification state, to the ON state. When the absolute value of the transformer current IL becomes equal to or less than a predetermined threshold Ith during the second period T2 (step-down), the control circuit 13 turns off at least one of the diagonal pair of switching elements to switch to diode rectification. Note that both switching elements may be turned off, although efficiency will decrease.

The threshold Ith is set to 0 A if the transformer current IL can be ideally measured and delays in the control system and drive system are ideally zero. In practice, considering voltage measurement errors and delays in the drive signals supplied to the switching elements, the threshold Ith is set to (0 ± margin) A. The value of the margin is set based on experiments and simulations by a designer such that the polarity of the transformer current IL does not reverse within a half cycle Tc/2 of the switching cycle and that a synchronous rectification period T2s of the second period T2 (step-down) is maximized.

The control circuit 13 skips the turn-off of at least one of the diagonal pair of switching elements included in the second bridge circuit 12 if the absolute value of the transformer current IL does not decrease to the threshold Ith within a predetermined time. The predetermined time is set to "half cycle Tc/2 - dead time." That is, if the absolute value of the transformer current IL does not decrease to the threshold Ith within the predetermined time, the diagonal pair of switching elements included in the second bridge circuit 12 enters the dead time while being maintained in the ON state. The entry to the dead time causes the control circuit 13 to control all of the fifth switching element Q5 to the eighth switching element Q8 to the OFF state. If the rate of decrease in the absolute value of the transformer current IL is slow and there is no risk of power backflow, it is not necessary to switch from synchronous rectification to diode rectification. On the other hand, if there is a risk of power backflow as shown in Fig. 7, switching from synchronous rectification to diode rectification is performed. When power backflow occurs, a reactive current unrelated to power transmission flows, leading to an increase in loss. By switching to diode rectification, an increase in loss due to the reactive current can be prevented.

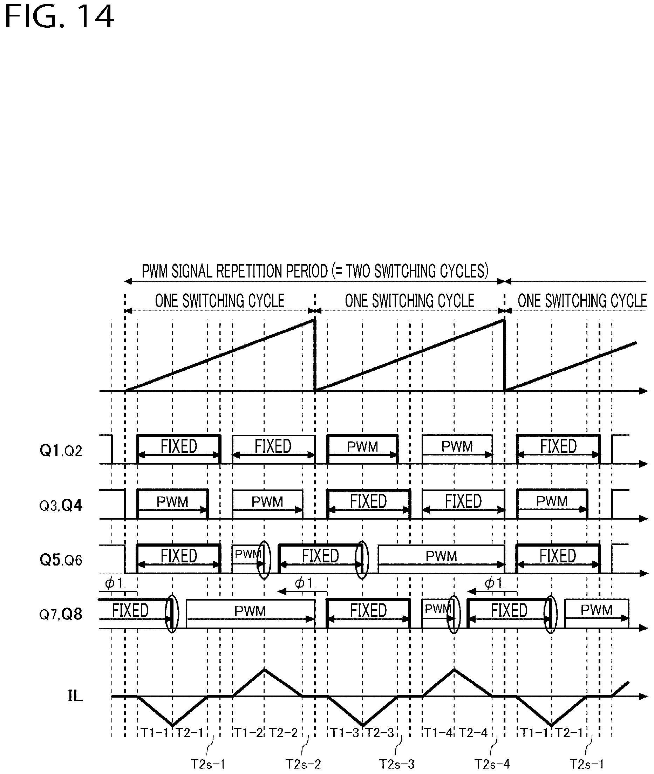

Fig. 14 is a diagram showing switching patterns of the first switching element Q1 to the eighth switching element Q8 and an example of transition of the transformer current IL during reverse direction power transmission in the step-down operation according to the exemplary embodiment of the power conversion device 1. In the switching patterns of the first switching element Q1 to the eighth switching element Q8 shown in Fig. 7, the example of stepping down and transmitting power from the first DC section to the second DC section has been described. In this regard, it is also possible to step down and transmit power from the second DC section to the first DC section. In this case, as shown in Fig. 14, the control circuit 13 only needs to swap the drive signals supplied to the first switching element Q1 to the fourth switching element Q4 with the drive signals supplied to the fifth switching element Q5 to the eighth switching element Q8.

### (Exemplary embodiment (Step-up))

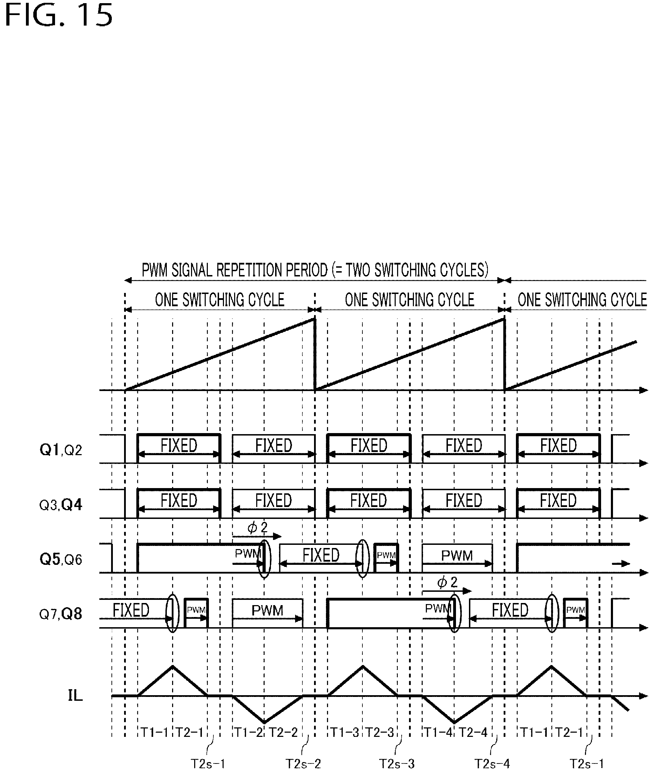

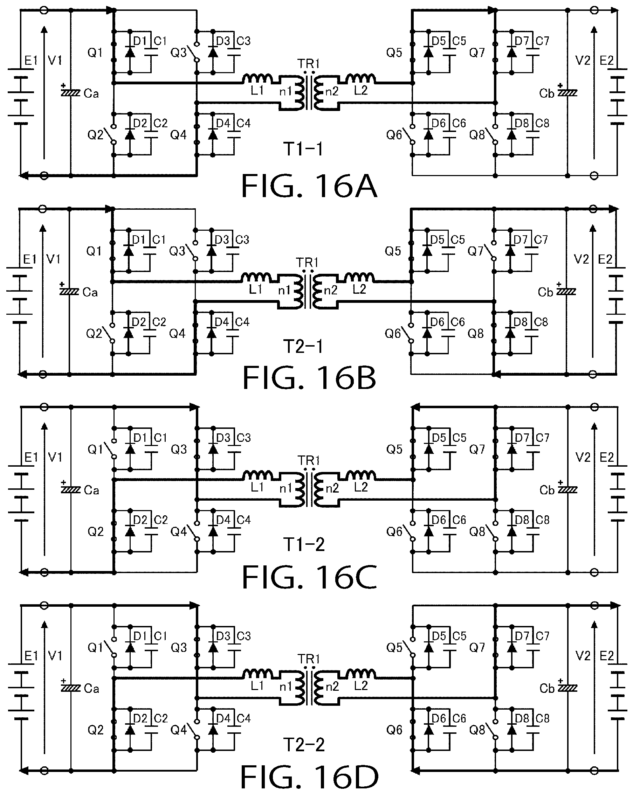

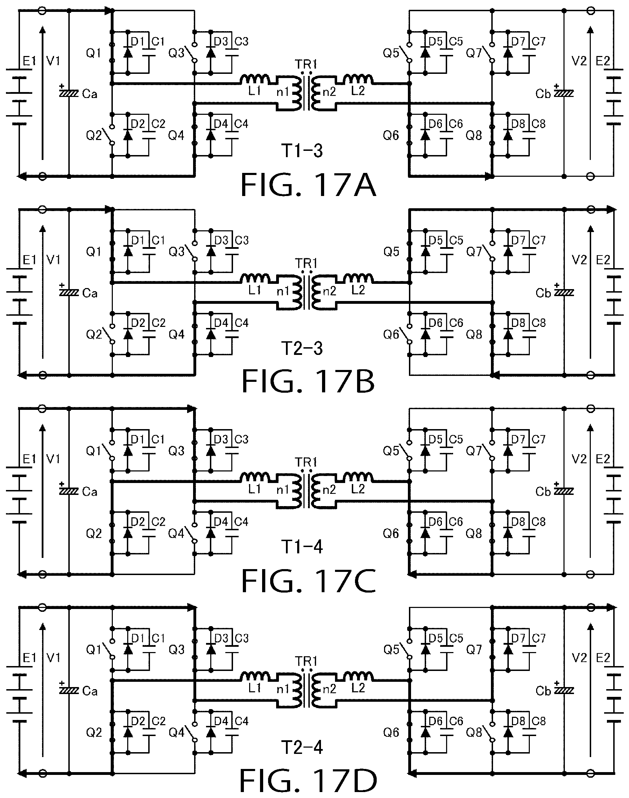

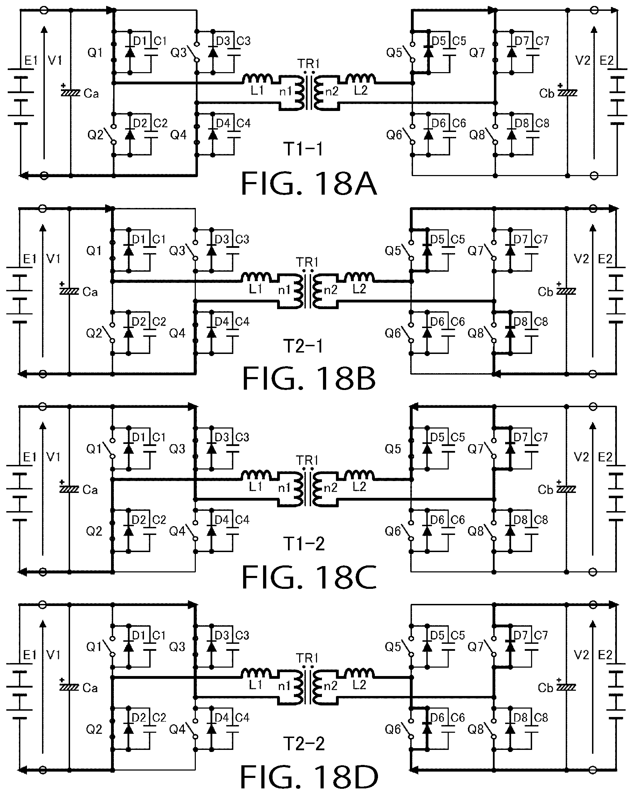

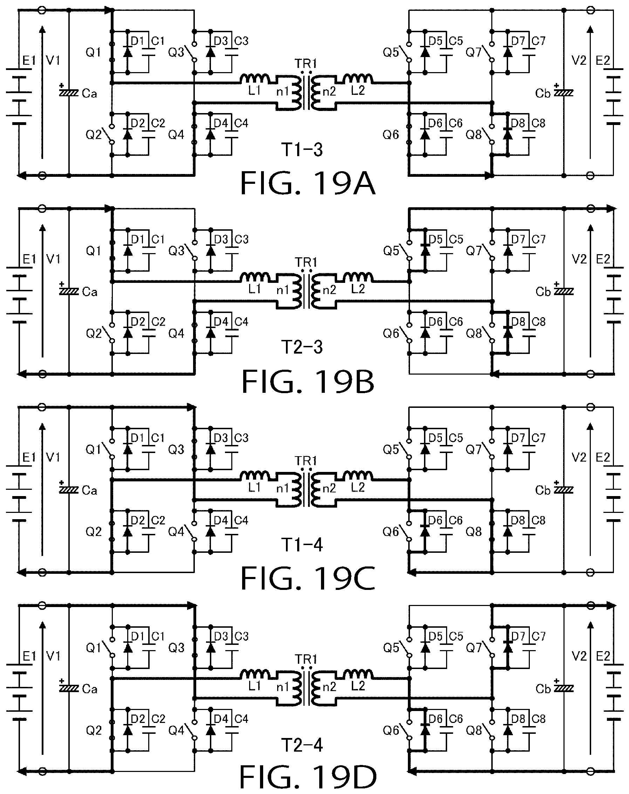

Fig. 15 is a diagram showing switching patterns of the first switching element Q1 to the eighth switching element Q8 and an example of transition of the transformer current IL during a step-up operation according to the exemplary embodiment of the power conversion device 1. Figs. 16A to 16D are diagrams for explaining a first example of switching patterns and current flows in the step-up operation according to the exemplary embodiment of the power conversion device 1 (Part 1). Figs. 17A to 17D are diagrams for explaining a first example of switching patterns and current flows in the step-up operation according to the exemplary embodiment of the power conversion device 1 (Part 2). Figs. 18A to 18D are diagrams for explaining a second example of switching patterns and current flows in the step-up operation according to the exemplary embodiment of the power conversion device 1 (Part 1). Figs. 19A to 19D are diagrams for explaining a second example of switching patterns and current flows in the step-up operation according to the exemplary embodiment of the power conversion device 1 (Part 2).

The present exemplary embodiment uses a combination of PWM and phase-shift methods for control. When stepping up and transmitting power from the first DC section to the second DC section, the control circuit 13 performs control so as to include a first period T1 (step-up) and a second period T2 (step-up). The first period T1 (step-up) is a period that serves as an accumulation state in which the first bridge circuit 11 establishes conduction between the first DC section and the primary winding n1 of the isolation transformer TR1, and both ends of the secondary winding n2 of the isolation transformer TR1 are short-circuited within the second bridge circuit 12. The second period T2 (step-up) is a period that serves as a transmission state in which the first bridge circuit 11 establishes conduction between the first DC section and the primary winding n1 of the isolation transformer TR1 and in which the second bridge circuit 12 establishes conduction between the secondary winding n2 of the isolation transformer TR1 and the second DC section.

The control circuit 13 generates the first period T1 (step-up) and the second period T2 (step-up) using a first pattern to a fourth pattern (step-up). The first example of switching patterns and current flows in the step-up operation shown in Figs. 16A to 16D and Figs. 17A to 17D is an example of performing synchronous rectification by controlling switching elements, which are to be controlled to be in the rectification state in the second bridge circuit 12, to the ON state. The second example of switching patterns and current flows in the step-up operation shown in Figs. 18A to 18D and Figs. 19A to 19D is an example of performing diode rectification by controlling switching elements, which are to be controlled to be in the rectification state in the second bridge circuit 12, to the OFF state.

In a first period T1-1 (step-up) in the first pattern (step-up), the first switching element Q1, the fourth switching element Q4, and the seventh switching element Q7 are in the ON state, the fifth switching element Q5 is in the rectification state, and the second switching element Q2, the third switching element Q3, the sixth switching element Q6, and the eighth switching element Q8 are in the OFF state (see Fig. 16A and Fig. 18A).

In a second period T2-1 (step-up) in the first pattern (step-up), the first switching element Q1 and the fourth switching element Q4 are in the ON state, the fifth switching element Q5 and the eighth switching element Q8 are in the rectification state, and the second switching element Q2, the third switching element Q3, the sixth switching element Q6, and the seventh switching element Q7 are in the OFF state (see Fig. 16B and Fig. 18B).

In the first pattern (step-up), the control circuit 13 transitions from the first period T1-1 (step-up) to the second period T2-1 (step-up) by turning off the seventh switching element Q7 conducting in the forward direction.

In a first period T1-2 (step-up) in the second pattern (step-up), the second switching element Q2, the third switching element Q3, and the fifth switching element Q5 are in the ON state, the seventh switching element Q7 is in the rectification state, and the first switching element Q1, the fourth switching element Q4, the sixth switching element Q6, and the eighth switching element Q8 are in the OFF state (see Fig. 16C and Fig. 18C).

In a second period T2-2 (step-up) in the second pattern (step-up), the second switching element Q2 and the third switching element Q3 are in the ON state, the sixth switching element Q6 and the seventh switching element Q7 are in the rectification state, and the first switching element Q1, the fourth switching element Q4, the fifth switching element Q5, and the eighth switching element Q8 are in the OFF state (see Fig. 16D and Fig. 18D).

In the second pattern (step-up), the control circuit 13 transitions from the first period T1-2 (step-up) to the second period T2-2 (step-up) by turning off the fifth switching element Q5 conducting in the forward direction.

In a first period T1-3 (step-up) in the third pattern (step-up), the first switching element Q1, the fourth switching element Q4, and the sixth switching element Q6 are in the ON state, the eighth switching element Q8 is in the rectification state, and the second switching element Q2, the third switching element Q3, the fifth switching element Q5, and the seventh switching element Q7 are in the OFF state (see Fig. 17A and Fig. 19A).

In a second period T2-3 (step-up) in the third pattern (step-up), the first switching element Q1 and the fourth switching element Q4 are in the ON state, the fifth switching element Q5 and the eighth switching element Q8 are in the rectification state, and the second switching element Q2, the third switching element Q3, the sixth switching element Q6, and the seventh switching element Q7 are in the OFF state (see Fig. 17B and Fig. 19B).

In the third pattern (step-up), the control circuit 13 transitions from the first period T1-3 (step-up) to the second period T2-3 (step-up) by turning off the sixth switching element Q6 conducting in the forward direction.

In a first period T1-4 (step-up) in the fourth pattern (step-up), the second switching element Q2, the third switching element Q3, and the eighth switching element Q8 are in the ON state, the sixth switching element Q6 is in the rectification state, and the first switching element Q1, the fourth switching element Q4, the fifth switching element Q5, and the seventh switching element Q7 are in the OFF state (see Fig. 17C and Fig. 19C).

In a second period T2-4 (step-up) in the fourth pattern (step-up), the second switching element Q2 and the third switching element Q3 are in the ON state, the sixth switching element Q6 and the seventh switching element Q7 are in the rectification state, and the first switching element Q1, the fourth switching element Q4, the fifth switching element Q5, and the eighth switching element Q8 are in the OFF state (see Fig. 17D and Fig. 19D).

In the fourth pattern (step-up), the control circuit 13 transitions from the first period T1-4 (step-up) to the second period T2-4 (step-up) by turning off the eighth switching element Q8 conducting in the forward direction.

The control circuit 13 supplies the same drive signal, with synchronized ON/OFF timing, to a one diagonal pair consisting of the first switching element Q1 and the fourth switching element Q4 included in the first bridge circuit 11, and supplies the same drive signal, with synchronized ON/OFF timing, to the other diagonal pair of the second switching element Q2 and the third switching element Q3.

The control circuit 13 fixes the duty cycle of the drive signals supplied to the first switching element Q1 and the fourth switching element Q4 to 50% regardless of the amount of power transmission, excluding the dead time. The control circuit 13 fixes a phase difference between the phase of the drive signals supplied to the first switching element Q1 and the fourth switching element Q4 and the phase of the drive signals supplied to the second switching element Q2 and the third switching element Q3 to 180° regardless of the amount of power transmission.

In this way, in the first bridge circuit 12, by fixing the duty cycle and the phase of the drive signals regardless of the amount of power transmission, loss can be suppressed most effectively, and power transmission efficiency can be maximized.

The control circuit 13 supplies different drive signals to the fifth switching element Q5 to the eighth switching element Q8 included in the second bridge circuit 12, respectively. More specifically, the control circuit 13 changes the duty cycle of drive signals supplied to a first diagonal pair of switching elements (e.g., the fifth switching element Q5 and the eighth switching element Q8) among the fifth switching element Q5 to the eighth switching element Q8 in the range of 0% to 100% according to the amount of power transmission, excluding the dead time.

The control circuit 13 changes the duty cycle of drive signals supplied to a second diagonal pair of switching elements (e.g., the sixth switching element Q6 and the seventh switching element Q7) among the fifth switching element Q5 to the eighth switching element Q8 within a range of 0% to 50% according to the amount of power transmission, excluding the dead time. The control circuit 13 controls a second phase difference φ2 between the turn-on timings of the drive signals supplied to the second diagonal pair of switching elements and the turn-on timings of the first switching element Q1 to the fourth switching element Q4 according to the amount of power transmission, excluding the dead time. More strictly, among the second diagonal pair of switching elements, a switching element with the duty cycle fixed at 50% undergoes phase shift, and a switching element with the duty cycle changing within a range of 0% to 50% does not undergo phase shift.

The control circuit 13 decreases the duty cycle of a drive signal supplied to one of the first diagonal pair of switching elements from 50% by an amount corresponding to the second phase difference φ2, excluding the dead time, and increases the duty cycle of a drive signal supplied to the other of the pair of switching elements from 50% by an amount corresponding to the second phase difference φ2, excluding the dead time. The control circuit 13 alternately swaps the switching element to be decreased from 50% and the switching element to be increased from 50% among the first diagonal pair of switching elements. The control circuit 13 fixes the duty cycle of a drive signal supplied to one of the second diagonal pair of switching elements at 50%, excluding the dead time, and decreases the duty cycle of a drive signal supplied to the other of the pair of switching elements from 50% by an amount corresponding to the second phase difference φ2, excluding the dead time. The control circuit 13 alternately swaps the switching element fixed at 50% and the switching element to be decreased from 50% among the second diagonal pair of switching elements.

In this way, in the second bridge circuit 12, the duty cycle and the phase shift amount are simultaneously controlled according to the amount of power transmission. As a result, as shown in Fig. 15, the turning-off that reverses the increase in the absolute value of the current can be distributed among the fifth to eighth switching elements Q5 to Q8, allowing the loss and heat generation to be distributed across the fifth to eighth switching elements Q5 to Q8. In the second comparative example shown in Fig. 6 above, loss and heat generation are concentrated on the fifth switching element Q5 and the sixth switching element Q6.

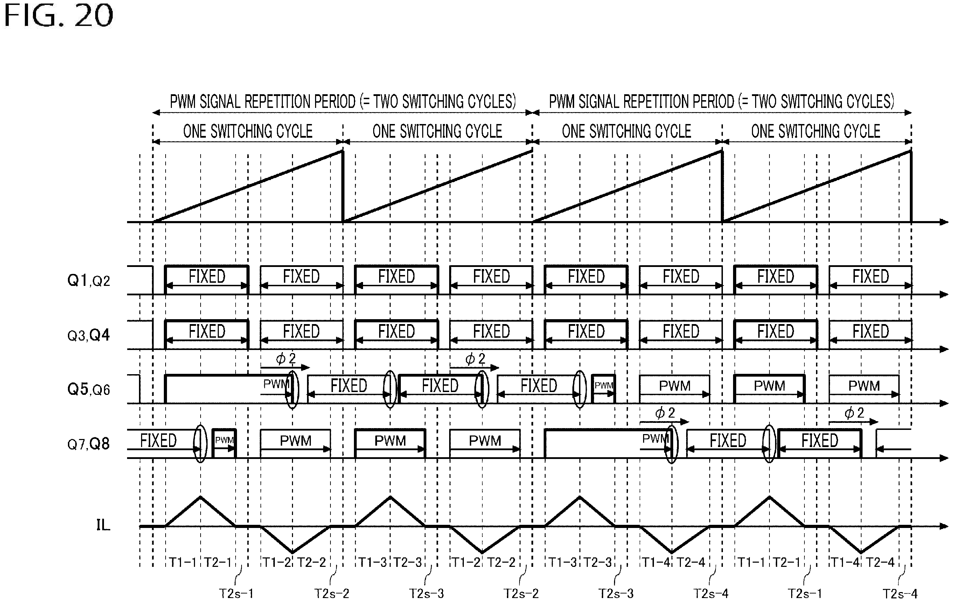

Fig. 20 is a diagram showing Specific Example 1 in which switching patterns of first to eighth switching elements Q1 to Q8 are periodically generated during the step-up operation according to the exemplary embodiment of the power conversion device 1. In the switching patterns shown in Fig. 20, the control circuit 13 generates each of the first pattern (step-up) to the fourth pattern (step-up) twice for every four switching cycles. In the example shown in Fig. 20, the patterns are generated in the following order: the first pattern (step-up), the second pattern (step-up), the third pattern (step-up), the second pattern (step-up), the third pattern (step-up), the fourth pattern (step-up), the first pattern (step-up), and the fourth pattern (step-up). In Specific Example 1, the respective numbers of occurrences of the first pattern (step-up) to the fourth pattern (step-up) are the same. Thereby, switching loss occurring on the secondary side in the step-up operation can be evenly allocated to the fifth switching element Q5 to the eighth switching element Q8, and heat generation can be distributed.

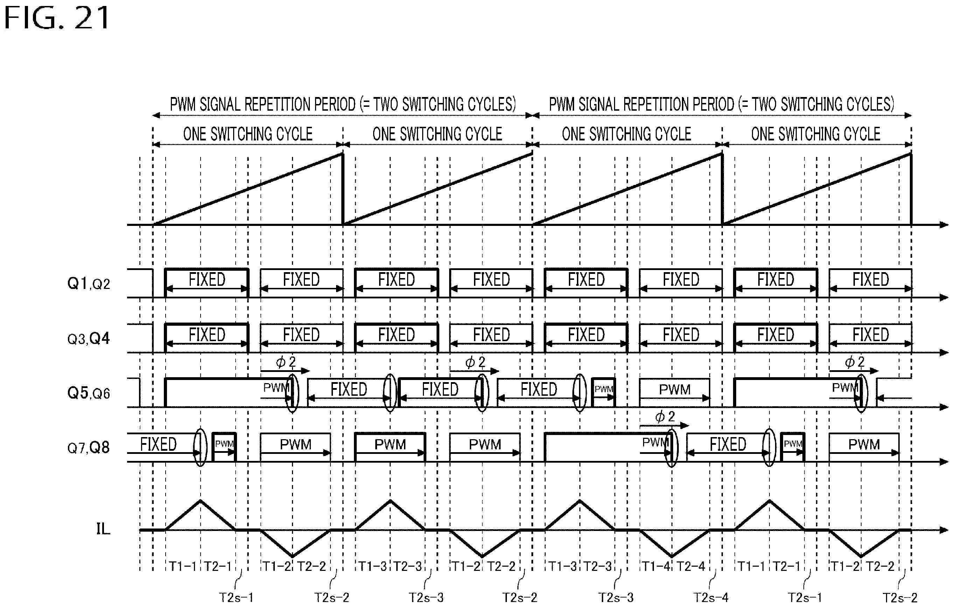

Fig. 21 is a diagram showing Specific Example 2 in which switching patterns of the first switching element Q1 to the eighth switching element Q8 are irregularly generated during the step-up operation according to the exemplary embodiment of the power conversion device 1. In the switching patterns shown in Fig. 21, the control circuit 13 controls the switching patterns such that the respective numbers of occurrences of the first pattern (step-down) to the fourth pattern (step-down) differ from each other. In the example shown in Fig. 21, for every four switching cycles, the first pattern (step-up) is generated twice, the second pattern (step-up) three times, the third pattern (step-up) twice, and the fourth pattern (step-up) once. Even in Specific Example 2, loss can be distributed to some extent, and a peak of heat generation on the secondary side can be suppressed compared with the control shown in the second comparative example.

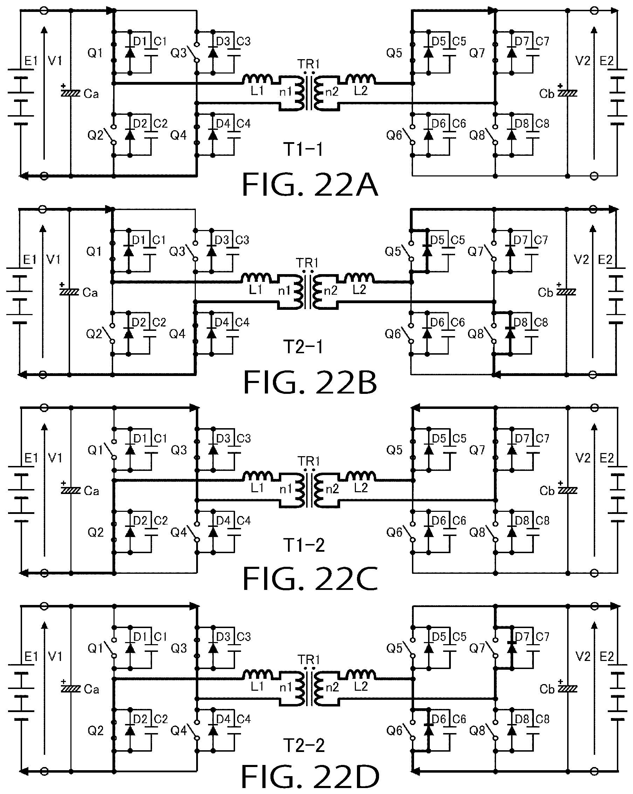

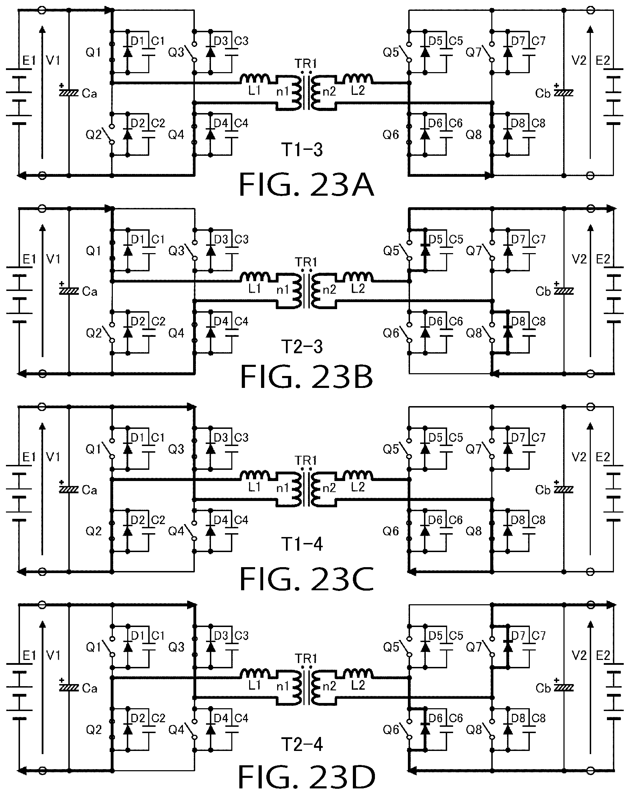

Figs. 22A to 22D are diagrams for explaining a third example of switching patterns and current flows in the step-up operation according to the exemplary embodiment of the power conversion device 1 (Part 1). Figs. 23A to 23D are diagrams for explaining a third example of switching patterns and current flows in the step-up operation according to the exemplary embodiment of the power conversion device 1 (Part 2).

In the third example (step-up), the control circuit 13 performs synchronous rectification by controlling switching elements included in the second bridge circuit 12, which are to be in the rectification state, to the ON state during the first period T1 (step-up). During the second period T2 (step-up), the control circuit 13 performs diode rectification by controlling switching elements included in the second bridge circuit 12, which are to be in the rectification state, to the OFF state. Since conduction loss by synchronous rectification is smaller than forward loss Vf by diode rectification, the third example (step-up) can reduce loss in the first period T1 (step-up) compared with the second example (step-up).

The switching pattern shown in Fig. 15 above represents control in which the first example (step-up) and the second example (step-up) are combined. In principle, during the second period T2 (step-up), the control circuit 13 performs synchronous rectification by controlling the diagonal pair of switching elements included in the second bridge circuit 12, which is to be in a rectification state, to the ON state. When the absolute value of the transformer current IL becomes equal to or less than the threshold Ith during the second period T2 (step-up), the control circuit 13 turns off at least one of the two diagonal switching elements to switch to diode rectification. Note that both switching elements may be turned off, although efficiency will decrease.

The control circuit 13 skips the turn-off of at least one of the diagonal pair of switching elements included in the second bridge circuit 12 if the absolute value of the transformer current IL does not decrease to the threshold Ith within a predetermined time. The predetermined time is set to "half cycle Tc/2 - dead time." That is, if the absolute value of the transformer current IL does not decrease to the threshold Ith within the predetermined time, the diagonal pair of switching elements included in the second bridge circuit 12 enters the dead time while being maintained in the ON state. The entry to the dead time causes the control circuit 13 to control all of the fifth switching element Q5 to the eighth switching element Q8 to the OFF state. If the rate of decrease in the absolute value of the transformer current IL is slow and there is no risk of power backflow, it is not necessary to switch from synchronous rectification to diode rectification. On the other hand, if there is a risk of power backflow as shown in Fig. 15, switching from synchronous rectification to diode rectification is performed. When power backflow occurs, a reactive current unrelated to power transmission flows, leading to an increase in loss. By switching to diode rectification, an increase in loss due to the reactive current can be prevented.

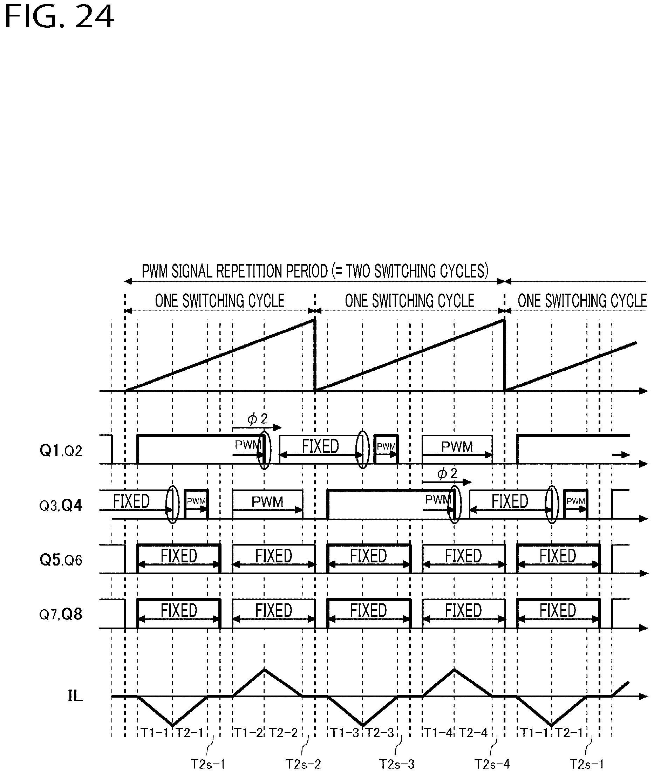

Fig. 24 is a diagram showing switching patterns of the first switching element Q1 to the eighth switching element Q8 and an example of transition of the transformer current IL during reverse direction power transmission in the step-up operation according to the exemplary embodiment of the power conversion device 1. In the switching patterns of the first switching element Q1 to the eighth switching element Q8 shown in Fig. 15, the example of stepping up and transmitting power from the first DC section to the second DC section has been described. In this regard, it is also possible to step up and transmit power from the second DC section to the first DC section. In this case, as shown in Fig. 24, the control circuit 13 only needs to swap the drive signals supplied to the first switching element Q1 to the fourth switching element Q4 with the drive signals supplied to the fifth switching element Q5 to the eighth switching element Q8.

### (Exemplary embodiment (Step-up/step-down))

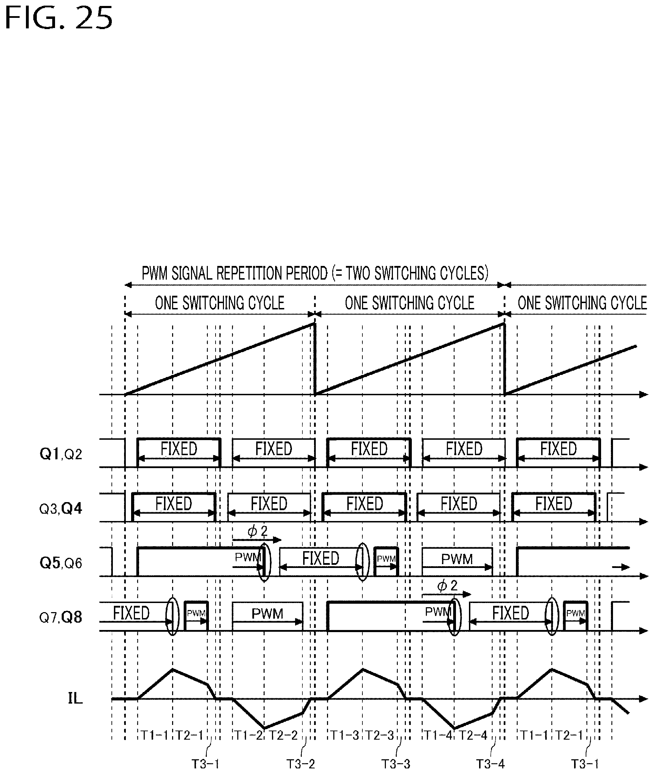

Fig. 25 is a diagram showing switching patterns of the first switching element Q1 to the eighth switching element Q8 and an example of transition of the transformer current IL during a step-up/step-down operation according to the exemplary embodiment of the power conversion device 1. The step-up/step-down operation is an operation inserted during the switching period from the step-down operation to the step-up operation or from the step-up operation to the step-down operation. When stepping up or stepping down and transmitting power from the first DC section to the second DC section during the switching period between the stepping up and the stepping down, the control circuit 13 performs control so as to include a first period T1 (step-up), a second period T2 (step-up), and a third period T3. The third period T3 is a period that serves as a commutation state in which both ends of the primary winding n1 of the isolation transformer TR1 are short-circuited within the first bridge circuit 11 and in which the second bridge circuit 12 establishes conduction between the secondary winding n2 of the isolation transformer TR1 and the second DC section.

In the step-up/step-down operation, as shown in Fig. 25, the control circuit 13 provides a phase difference between a drive signal supplied to the first switching element Q1 and a drive signal supplied to the fourth switching element Q4, and provides a phase difference between a drive signal supplied to the second switching element Q2 and a drive signal supplied to the third switching element Q3. A period corresponding to this phase difference serves as the third period T3. In the step-up/step-down operation, since the third period T3 (a state in which the first DC section and the isolation transformer TR1 are disconnected) is inserted before the end of the second period T2 (a state in which the first DC section and the isolation transformer TR1 are in a conduction state), energy supplied from the first DC section to the second DC section is suppressed.

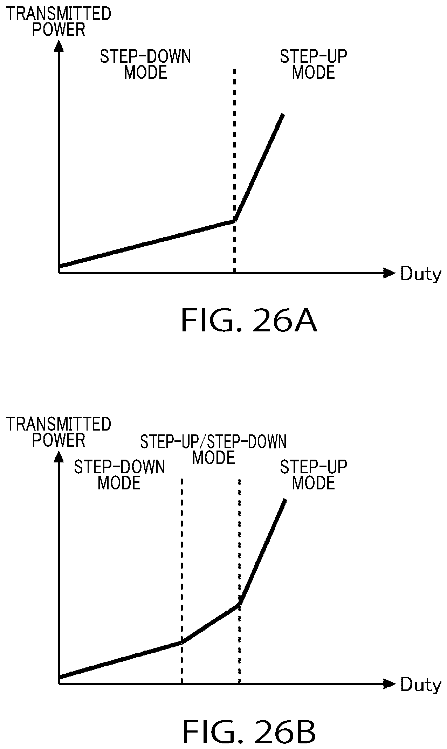

Fig. 26A is a diagram schematically illustrating a relationship between a duty ratio and transmitted power when no step-up/step-down mode is provided. Fig. 26B is a diagram schematically illustrating a relationship between a duty ratio and transmitted power when a step-up/step-down mode is provided. As shown in Fig. 26A, when no step-up/step-down mode is provided, one inflection point occurs at which the slope of transmitted power (which may be considered as transmitted current) changes at the time of switching between the step-down mode and the step-up mode. As shown in Fig. 26B, when the step-up/step-down mode is provided, two inflection points occur: at the time of switching between the step-down mode and the step-up/step-down mode, and at the time of switching between the step-up/step-down mode and the step-up mode. When the step-up/step-down mode is provided, although the number of inflection points is two, the change in the slope at each inflection point is gentler than the change in the slope at the inflection point when no step-up/step-down mode is provided. As shown in Fig. 26B, by interposing the step-up/step-down mode between the step-up mode and the step-down mode, the circuit gain can be changed smoothly, and current oscillation can be suppressed to be small.

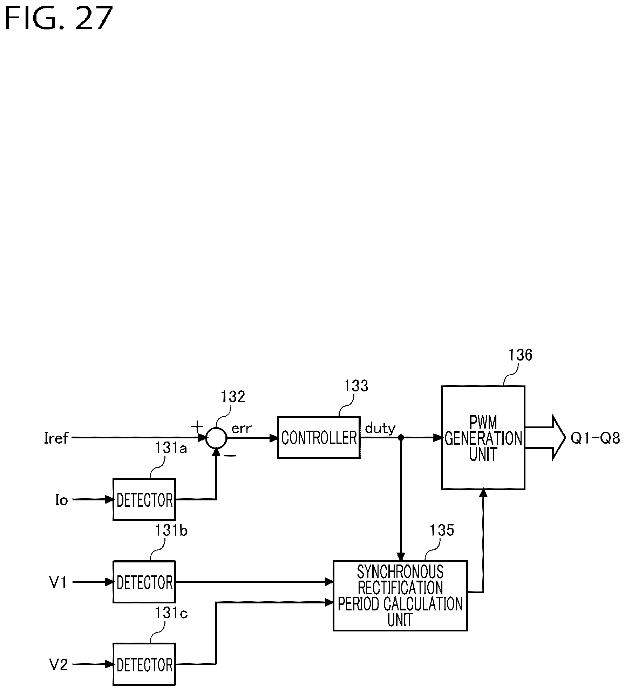

Fig. 27 is a diagram showing a configuration example of the control circuit 13. The control circuit 13 includes detectors 131a to 131c, a subtraction unit 132, a controller 133, a synchronous rectification period calculation unit 135, and a PWM generation unit 136. The detector 131a includes an A/D converter. The A/D converter converts an analog output current value Io detected by the current sensor 23 into a digital output current value at a predetermined sampling rate. The detector 131b includes an A/D converter. The A/D converter converts an analog input voltage value V1 detected by the first voltage sensor 21 into a digital input voltage value at a predetermined sampling rate. The detector 131c includes an A/D converter. The A/D converter converts an analog output voltage value V2 detected by the second voltage sensor 22 into a digital input voltage value at a predetermined sampling rate. The A/D converter may be shared in a time-division manner by the detectors 131a to 131c.

The subtraction unit 132 calculates a deviation *err* between a current command value *Iref*, which is to be a target value, and the output current value input from the detectors 131. The controller 133 calculates a control manipulated variable *duty* by performing PI control on the deviation *err* using a predetermined control gain. The controller 133 outputs the calculated control manipulated variable *duty* to the synchronous rectification period calculation unit 135 and the PWM generation unit 136.

The synchronous rectification period calculation unit 135 calculates a synchronous rectification period in the second bridge circuit 12 based on a differential voltage (V1 - V2), (V2 - V1), or the like between an input voltage V1 detected by the first voltage sensor 21 and an output voltage V2 detected by the second voltage sensor 22.

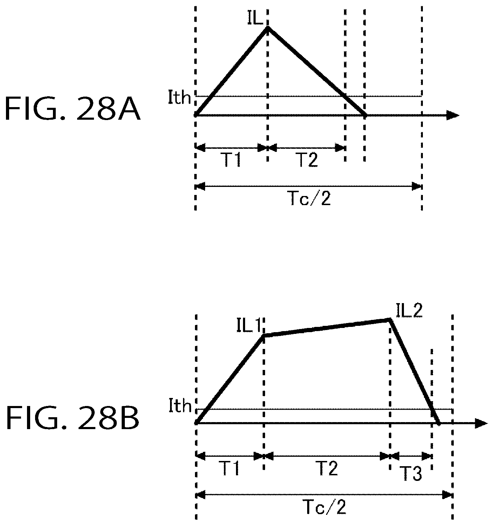

Figs. 28A to 28B are diagrams showing, in graphs, an example of variables and constants of a theoretical formula for calculating a synchronous rectification period. Hereinafter, a method for calculating the transformer current IL and a synchronous rectification period T2s of the second period T2 in the step-down mode and the step-up mode will be described with reference to Fig. 28A.

The synchronous rectification period calculation unit 135 calculates the transformer current IL in the first period T1 (step-down) by the following (Equation 1). $\begin{matrix}V 1 - V 2 = L ⋅ \left(IL/T1\right) \\ IL 1 = \left(V1-V2\right) ⋅ T 1 / L\end{matrix}$ (Equation 1) where L is an inductance between the first bridge circuit 11 and the second bridge circuit 12 (in the present exemplary embodiment, L = L1 + L2).

T1 is the time of the first period T1 (step-down) based on feedback control, and in the present exemplary embodiment, it is determined by the control manipulated variable *duty* calculated by the controller 133.

The synchronous rectification period calculation unit 135 calculates the transformer current (Ith - IL) during the synchronous rectification period T2s of the second period T2 (step-down) by the following (Equation 2). $\begin{matrix}0 - V 2 = L ⋅ \left(\left(Ith-IL\right)/T2s\right) \\ Ith - IL = - V 2 ⋅ T 2 s / L\end{matrix}$ (Equation 2)

The synchronous rectification period calculation unit 135 calculates the synchronous rectification period T2s of the second period T2 (step-down) by the following (Equation 3). $T 2 s = \left(\left(V1-V2\right)⋅T1/V2\right) - \left(\left(L/V2\right)⋅Ith\right)$ (Equation 3)

Since the inductance L and the threshold Ith are constants, the synchronous rectification period T2s of the second period T2 (step-down) can be calculated by detecting the input voltage V1 and the output voltage V2.

The synchronous rectification period calculation unit 135 calculates the transformer current IL of the first period T1 (step-up) by the following (Equation 4). $\begin{matrix}V 1 = L ⋅ \left(IL/T1\right) \\ IL = V 1 ⋅ T 1 / L\end{matrix}$ (Equation 4) where L is an inductance between the first bridge circuit 11 and the second bridge circuit 12 (in the present exemplary embodiment, L = L1 + L2).
T1 is the time of the first period T1 (step-up) based on feedback control, and in the present exemplary embodiment, it is determined by the control manipulated variable *duty* calculated by the controller 133.

The synchronous rectification period calculation unit 135 calculates the transformer current (Ith - IL) during the synchronous rectification period T2s of the second period T2 (step-up) by the following (Equation 5). $\begin{matrix}V 1 - V 2 = L ⋅ \left(\left(Ith-IL\right)/T2s\right) \\ Ith - IL = \left(V1-V2\right) ⋅ T 2 s / L\end{matrix}$ (Equation 5)

The synchronous rectification period calculation unit 135 calculates the synchronous rectification period T2s of the second period T2 (step-up) by the following (Equation 6). $T 2 s = \left(V1⋅T1/\left(V2-V1\right)\right) - \left(L/\left(V2-V1\right)⋅Ith\right)$ (Equation 6)

Since the inductance L and the threshold Ith are constants, the synchronous rectification period T2s of the second period T2 (step-up) can be calculated by detecting the input voltage V1 and the output voltage V2.

In the step-up/step-down mode, if the absolute value of the transformer current IL becomes equal to or less than the threshold Ith in the second period T2 (step-up), the synchronous rectification period T2s of the second period T2 (step-up) can be calculated by the above (Equation 4) to (Equation 6). In the step-up/step-down mode, if the absolute value of the transformer current IL does not become equal to or less than the threshold Ith in the second period T2 (step-up) but becomes equal to or less than the threshold Ith in the third period T3, a method for calculating the transformer current IL and the synchronous rectification period T3s of the third period T3 will be described with reference to Fig. 26B.

The synchronous rectification period calculation unit 135 calculates the transformer current IL1 of the first period T1 (step-up) in the step-up/step-down mode by the following (Equation 7). $\begin{matrix}V 1 = L ⋅ \left(IL1/T1\right) \\ IL 1 = V 1 ⋅ T 1 / L\end{matrix}$ (Equation 7) where L is an inductance between the first bridge circuit 11 and the second bridge circuit 12 (in the present exemplary embodiment, L = L1 + L2). T1 is the time of the first period T1 (step-up) based on feedback control, and in the present exemplary embodiment, it is determined by the control manipulated variable *duty* calculated by the controller 133.

In the step-up/step-down mode, the synchronous rectification period calculation unit 135 calculates the transformer current IL2 of the second period T2 (step-up) when the absolute value of the transformer current IL does not become equal to or less than the threshold Ith in the second period T2 (step-up) by the following (Equation 8). $\begin{matrix}V 1 - V 2 = L ⋅ \left(\left(IL2-IL1\right)/T2\right) \\ IL 2 - IL 1 = \left(V1-V2\right) ⋅ T 2 / L\end{matrix}$ (Equation 8)

In the step-up/step-down mode, the synchronous rectification period calculation unit 135 calculates the transformer current (Ith - IL2) in the synchronous rectification period T3s of the third period T3 when the absolute value of the transformer current IL becomes equal to or less than the threshold Ith in the third period T3 by the following (Equation 9). $\begin{matrix}- V 2 = L ⋅ \left(\left(Ith-IL2\right)/T3s\right) \\ Ith - IL 2 = - V 2 ⋅ T 2 / L\end{matrix}$ (Equation 9)

In the step-up/step-down mode, the synchronous rectification period calculation unit 135 calculates the synchronous rectification period T3s of the third period T3 when the absolute value of the transformer current IL becomes equal to or less than the threshold Ith in the third period T3 by the following (Equation 10). 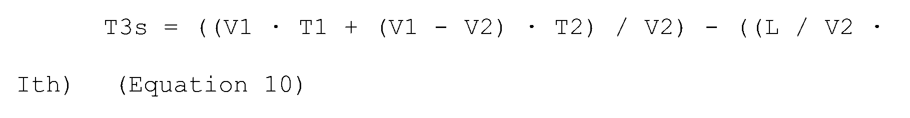 T3s = ((V1 · T1 + (V1 - V2) · T2) / V2) - ((L / V2 · Ith) (Equation 10)

Since the inductance L and the threshold Ith are constants, the synchronous rectification period T3s of the third period T3 in the step-up/step-down mode can be calculated by detecting the input voltage V1 and the output voltage V2.

The PWM generation unit 136 generates a PWM signal for driving the first switching element Q1 to the eighth switching element Q8 based on the control manipulated variable *duty* calculated by the controller 133 and the synchronous rectification period T2s of the second period T2 or the synchronous rectification period T3s of the third period T3 calculated by the synchronous rectification period calculation unit 135.

As described above, according to the present exemplary embodiment, heat generation of a plurality of switching elements included in the DAB converter can be equalized. In particular, in the step-down mode, loss and heat generation of the first switching element Q1 to the fourth switching element Q4 can be made uniform, and in the step-up mode, loss and heat generation of the fifth switching element Q5 to the eighth switching element Q8 can be made uniform. Thereby, peaks of loss and heat generation of a switching element where the maximum loss occurs can be reduced, and reduction in size and cost of a member for cooling the switching elements (for example, a heat sink) can be realized. Furthermore, variation in the lifespan among switching elements can be reduced, facilitating product management.

Further, by performing synchronous rectification in the second bridge circuit 12 in the second period T2 (step-down), the second period T2 (step-up), and the third period T3, a high-efficiency DAB converter can be realized. In this case, when the transformer current IL drops to near 0 A, the efficiency degradation caused by reactive current can be prevented by switching the second bridge circuit 12 from synchronous rectification to diode rectification. The present exemplary embodiment is particularly effective for a DAB converter using SiC-MOSFETs, which have a large parasitic diode loss.

Described above is an explanation based on the embodiments of the present disclosure. The embodiments are intended to be illustrative only, and it will be obvious to those skilled in the art that various modifications to constituting elements and processes could be developed and that such modifications are also within the scope of the present disclosure.

In the above exemplary embodiment, an example has been described in which the transformer current IL is calculated using the above (Equation 1) to (Equation 10) without installing a current sensor between the first bridge circuit 11 and the isolation transformer TR1 and between the isolation transformer TR1 and the second bridge circuit 12. In this regard, a current sensor may be installed between the first bridge circuit 11 and the isolation transformer TR1 or between the isolation transformer TR1 and the second bridge circuit 12, and a current measured by the current sensor may be used as the transformer current IL to be compared with the threshold Ith.

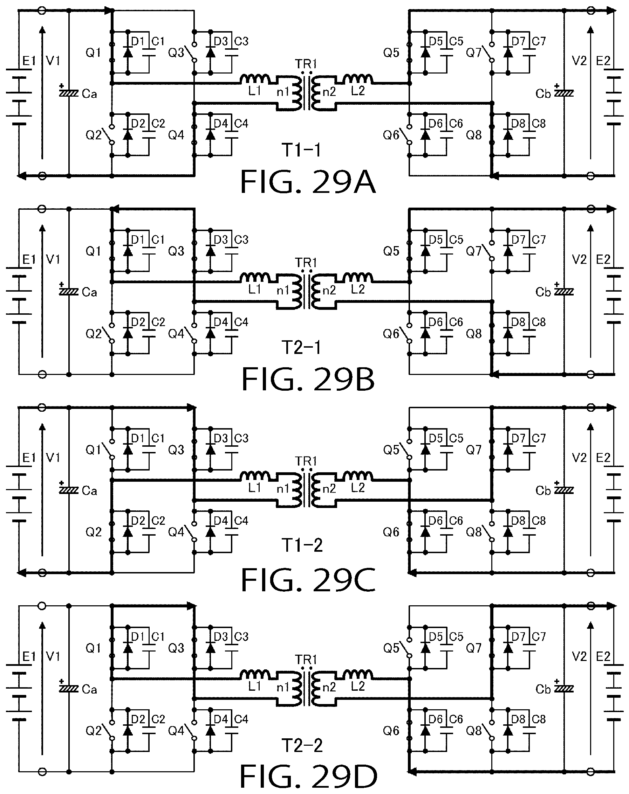

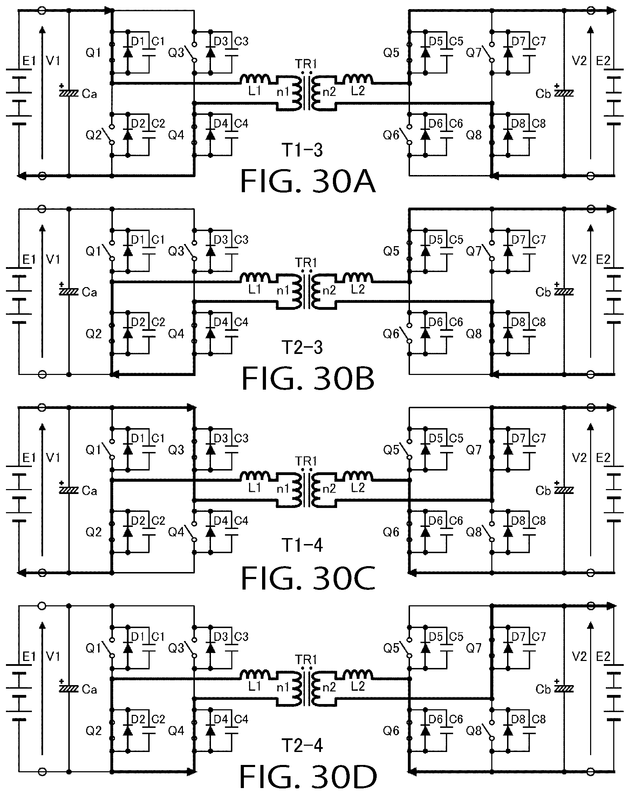

Figs. 29A to 29D are diagrams for explaining still another example of switching patterns and current flows in a step-down operation according to the exemplary embodiment of the power conversion device 1 (Part 1). Figs. 30A to 30D are diagrams for explaining still another example of switching patterns and current flows in a step-down operation according to the exemplary embodiment of the power conversion device 1 (Part 2).

In this example, in a second period T2-1 (step-down) in the first pattern (step-down), the first switching element Q1, the third switching element Q3, the fifth switching element Q5, and the eighth switching element Q8 are in the ON state, and the second switching element Q2, the fourth switching element Q4, the sixth switching element Q6, and the seventh switching element Q7 are in the OFF state (see Fig. 29B).

In the second period T2-2 (step-down) in the second pattern (step-down), the first switching element Q1, the third switching element Q3, the sixth switching element Q6, and the seventh switching element Q7 are in the ON state, and the second switching element Q2, the fourth switching element Q4, the fifth switching element Q5, and the eighth switching element Q8 are in the OFF state (see Fig. 29D).

In the second period T2-3 (step-down) in the third pattern (step-down), the second switching element Q2, the fourth switching element Q4, the fifth switching element Q5, and the eighth switching element Q8 are in the ON state, and the first switching element Q1, the third switching element Q3, the sixth switching element Q6, and the seventh switching element Q7 are in the OFF state (see Fig. 30B).

In the second period T2-4 (step-down) in the fourth pattern (step-down), the second switching element Q2, the fourth switching element Q4, the sixth switching element Q6, and the seventh switching element Q7 are in the ON state, and the first switching element Q1, the third switching element Q3, the fifth switching element Q5, and the eighth switching element Q8 are in the OFF state (see Fig. 30D).

In the second period T2, loss can be reduced most effectively by performing synchronous rectification on both the primary side and the secondary side.

The embodiment may be specified by the following items.

### [Item 1]

A power conversion device (1) including:
a first bridge circuit (11) that has a first leg in which a first switching element (Q1) and a second switching element (Q2) are connected in series and a second leg in which a third switching element (Q3) and a fourth switching element (Q4) are connected in series, the first leg and the second leg being connected in parallel to a first DC section (E1, Ca);
a second bridge circuit (12) that has a third leg in which a fifth switching element (Q5) and a sixth switching element (Q6) are connected in series and a fourth leg in which a seventh switching element (Q7) and an eighth switching element (Q8) are connected in series, the third leg and the fourth leg being connected in parallel to a second DC section (E2, Cb);
an isolation transformer (TR1) that is connected between the first bridge circuit (11) and the second bridge circuit (12); and
a control circuit (13) that controls the first switching element (Q1) to the eighth switching element (Q8),
wherein the control circuit (13):
   when stepping up and transmitting power from the first DC section (E1, Ca) to the second DC section (E2, Cb), performs control such that the second bridge circuit (12) includes: a first period in which both ends of the secondary winding (n2) of the isolation transformer (TR1) are short-circuited within the second bridge circuit (12); and a second period in which the secondary winding (n2) of the isolation transformer (TR1) is electrically connected to the second DC section (E2, Cb); and
   generates:
      a first pattern in which the seventh switching element (Q7) conducting in a forward direction is turned off to transition from the first period to the second period;
      a second pattern in which the fifth switching element (Q5) conducting in the forward direction is turned off to transition from the first period to the second period;
      a third pattern in which the sixth switching element (Q6) conducting in the forward direction is turned off to transition from the first period to the second period; and
      a fourth pattern in which the eighth switching element (Q8) conducting in the forward direction is turned off to transition from the first period to the second period.

According to this, switching losses occurring in the second bridge circuit (12) during a step-up operation can be equalized and allocated among the fifth switching element (Q5) to the eighth switching element (Q8), thereby distributing heat generation.

### [Item 2]

The power conversion device (1) according to Item 1,
wherein the control circuit (13) generates each of the first pattern to the fourth pattern twice for every four switching cycles.

According to this, switching losses occurring in the second bridge circuit (12) can be equally allocated among the fifth switching element (Q5) to the eighth switching element (Q8).

### [Item 3]

The power conversion device (1) according to Item 1,
wherein the control circuit (13) performs control such that the respective numbers of occurrences of the first pattern to the fourth pattern differ from each other.

According to this, the switching losses occurring in the second bridge circuit (12) can be equalized and allocated among the fifth switching element (Q5) to the eighth switching element (Q8).

### [Item 4]

The power conversion device (1) according to Item 1,
wherein in the first period of the first pattern, the first switching element (Q1), the fourth switching element (Q4), and the seventh switching element (Q7) are in an ON state, and the fifth switching element (Q5) is in a rectification state,
wherein in the second period of the first pattern, the first switching element (Q1) and the fourth switching element (Q4) are in an ON state, and the fifth switching element (Q5) and the eighth switching element (Q8) are in a rectification state,
wherein in the first period of the second pattern, the second switching element (Q2), the third switching element (Q3), and the fifth switching element (Q5) are in an ON state, and the seventh switching element (Q7) is in a rectification state,
wherein in the second period of the second pattern, the second switching element (Q2) and the third switching element (Q3) are in an ON state, and the sixth switching element (Q6) and the seventh switching element (Q7) are in a rectification state,
wherein in the first period of the third pattern, the first switching element (Q1), the fourth switching element (Q4), and the sixth switching element (Q6) are in an ON state, and the eighth switching element (Q8) is in a rectification state,
wherein in the second period of the third pattern, the first switching element (Q3) and the fourth switching element (Q4) are in an ON state, and the fifth switching element (Q5) and the eighth switching element (Q8) are in a rectification state,
wherein in the first period of the fourth pattern, the second switching element (Q2), the third switching element (Q3), and the eighth switching element (Q8) are in an ON state, and the sixth switching element (Q6) is in a rectification state, and
wherein in the second period of the fourth pattern, the second switching element (Q2) and the third switching element (Q3) are in an ON state, and the sixth switching element (Q6) and the seventh switching element (Q7) are in a rectification state.

According to this, the switching losses occurring in the second bridge circuit (12) can be equalized and allocated among the fifth switching element (Q5) to the eighth switching element (Q8).

### [Item 5]

The power conversion device (1) according to Item 1,
wherein the control circuit (13):
when transmitting power from the first DC section (E1, Ca) to the second DC section (E2, Cb) during a switching period between the stepping up and the stepping down, performs control so as to include: the first period; the second period; and a third period in which both ends of the primary winding (n1) of the isolation transformer (TR1) are short-circuited within the first bridge circuit (11) while the second bridge circuit (12) causes the secondary winding (n2) of the isolation transformer (TR1) to be electrically connected to the second DC section (E2, Cb).

According to this, during the witching period between the stepping up and the stepping down, the circuit gain can be changed smoothly, and current oscillation can be kept low.

### [Item 6]

The power conversion device (1) according to Item 4,
wherein the control circuit (13):
supplies drive signals with a duty cycle fixed at 50% to the first switching element (Q1) and the fourth switching element (Q4);
supplies drive signals with a duty cycle fixed at 50% to the second switching element (Q2) and the third switching element (Q3); and
fixes a first phase difference between the phase of the drive signals supplied to the first switching element (Q1) and the fourth switching element (Q4) and the phase of the drive signals supplied to the second switching element (Q2) and the third switching element (Q3) at 180°.

According to this, by fixing the duty cycle and phase of the first switching element (Q1) to the fourth switching element (Q4), the loss in the first bridge circuit (11) can be minimized, and the power transmission efficiency can be maximized.

### [Item 7]

The power conversion device (1) according to Item 4,
wherein the control circuit (13):
supplies, to the fifth switching element (Q5) to the eighth switching element (Q8), respective drive signals different from each other, each having a duty cycle that varies according to the amount of power transmission; and
controls a second phase difference between turn-on timings of drive signals supplied to one diagonal pair of switching elements among the fifth switching element (Q5) to the eighth switching element (Q8) and turn-on timings of the first switching element (Q1) to the fourth switching element (Q4) according to the amount of power transmission.

According to this, by simultaneously controlling the duty cycle and the phase difference of the fifth switching element (Q5) to the eighth switching element (Q8) according to the amount of power transmission, loss distribution and heat distribution of the second bridge circuit (12) can be realized.

### [Item 8]

The power conversion device (1) according to Item 7,
wherein the control circuit (13):
fixes the duty cycle of a drive signal supplied to one switching element of the one diagonal pair of switching elements at 50% and decreases the duty cycle of a drive signal supplied to the other switching element of the pair of switching elements from 50% by an amount corresponding to the second phase difference; and
decreases, from 50%, a duty cycle of a drive signal supplied to one switching element of the other diagonal pair of switching elements among the fifth switching element (Q5) to the eighth switching element (Q8) by an amount corresponding to the second phase difference, and increases, from 50%, a duty cycle of a drive signal supplied to the other switching element of the diagonal pair of switching elements by the amount corresponding to the second phase difference.

According to this, by simultaneously controlling the duty cycle and the phase differences of the fifth switching element (Q5) to the eighth switching element (Q8) using the same control variable according to the amount of power transmission, loss distribution and heat distribution in the second bridge circuit (12) can be realized.

### [Item 9]

The power conversion device (1) according to Item 4,
wherein the control circuit (13) controls a switching element included in the second bridge circuit (12), which is to be in a rectification state, to be in an ON state.

This allows for an increase in the synchronous rectification period to reduce diode forward loss, which is larger than synchronous conduction loss and consequently allows for a reduction in the overall loss.

### [Item 10]

The power conversion device (1) according to Item 4,
wherein the control circuit (13) controls a diagonal pair of switching elements of the second bridge circuit (12) included in the second bridge circuit (12), which is to be in a rectification state in the second period, to be in an ON state and turns off at least one of the diagonal pair of switching elements when an absolute value of a current flowing through the isolation transformer (TR1) becomes equal to or less than a predetermined threshold.

According to this, during the second period, the synchronous rectification period can be increased while suppressing reactive current, thereby reducing the total loss.

### [Item 11]

The power conversion device (1) according to Item 10,
wherein the control circuit (13) calculates, by using a first derivation equation, a period T2s for controlling a diagonal pair of switching elements included in the second bridge circuit (12) to be in an ON state during the second period; and
wherein the first derivation equation is: $T 2 s = \left(V1⋅T1/\left(V2-V1\right)\right) - \left(L/\left(V2-V1\right)⋅Ith\right)$
where:
   V1 is a voltage of the first DC section (E1, Ca);
   V2 is a voltage of the second DC section (E2, Cb);
   T1 is a duration of the first period based on feedback control;
   L is an inductance between the first bridge circuit (11) and the second bridge circuit (12); and
   Ith is the predetermined threshold.

According to this, during the second period, it is possible to derive the optimal time to switch from synchronous rectification to diode rectification.

### [Item 12]

The power conversion device (1) according to Item 5,
wherein, in the third period, the control circuit (13) controls a diagonal pair of switching elements included in the second bridge circuit (12), which is to be in a rectification state, to be in an ON state and turns off at least one of the diagonal pair of switching elements when an absolute value of a current flowing through the isolation transformer (TR1) becomes equal to or less than a predetermined threshold.

According to this, during the third period, the synchronous rectification period can be increased while suppressing reactive current, thereby reducing the total loss.

### [Item 13]

The power conversion device (1) according to Item 12,
wherein the control circuit (13) calculates, by using a second derivation equation, a period T3s for controlling a diagonal pair of switching elements included in the second bridge circuit (12) to be in an ON state during the third period; and
wherein the second derivation equation is: 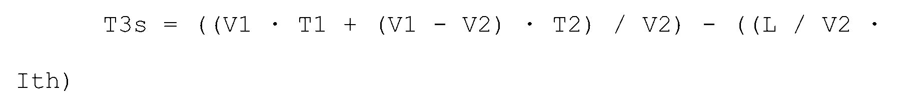 T3s = ((V1 · T1 + (V1 - V2) · T2) / V2) - ((L / V2 · Ith)
where:
   V1 is a voltage of the first DC section (E1, Ca);
   V2 is a voltage of the second DC section (E2, Cb);
   T1 is a duration of the first period based on feedback control;
   T2 is a duration of the second period;
   L is an inductance between the first bridge circuit (11) and the second bridge circuit (12); and
   Ith is the predetermined threshold.

According to this, during the third period, it is possible to derive the optimal time to switch from synchronous rectification to diode rectification.

### [Item 14]

The power conversion device (1) according to Item 1,
wherein the control circuit (13) swaps drive signals supplied to the first switching element (Q1) to the fourth switching element (Q4) with drive signals supplied to the fifth switching element (Q5) to the eighth switching element (Q8) when stepping up and transmitting power from the second DC section (E2, Cb) to the first DC section (E1, Ca).

According to this, bidirectional operation can be achieved.

### INDUSTRIAL APPLICABILITY

The present invention is applicable to photovoltaic systems and V2H systems.

### REFERENCE SIGNS LIST

E1 first DC power supply, E2 second DC power supply, 1 power conversion device, 11 first bridge circuit, 12 second bridge circuit, 13 control circuit, 21 first voltage sensor, 22 second voltage sensor, 23 current sensor, 131 detector, 132 subtractor, 133 controller, 135 synchronous rectification period calculation unit, 136 PWM generation unit, Q1-Q8 switching element, D1-D8 diode, C1-C8 capacitance, L1 first inductance, L2 second inductance, TR1 isolation transformer, n1 primary winding, n2 secondary winding, Ca primary-side capacitor, Cb secondary-side capacitor

## Claims

1. A power conversion device comprising:
a first bridge circuit that has a first leg in which a first switching element and a second switching element are connected in series and a second leg in which a third switching element and a fourth switching element are connected in series, the first leg and the second leg being connected in parallel to a first DC section;
a second bridge circuit that has a third leg in which a fifth switching element and a sixth switching element are connected in series and a fourth leg in which a seventh switching element and an eighth switching element are connected in series, the third leg and the fourth leg being connected in parallel to a second DC section;
an isolation transformer that is connected between the first bridge circuit and the second bridge circuit; and
a control circuit that controls the first switching element to the eighth switching element,
wherein the control circuit:
when stepping up and transmitting power from the first DC section to the second DC section, performs control such that the second bridge circuit includes: a first period in which both ends of the secondary winding of the isolation transformer are short-circuited within the second bridge circuit; and a second period in which the secondary winding of the isolation transformer is electrically connected to the second DC section; and
generates:
a first pattern in which the seventh switching element conducting in a forward direction is turned off to transition from the first period to the second period;
a second pattern in which the fifth switching element conducting in the forward direction is turned off to transition from the first period to the second period;
a third pattern in which the sixth switching element conducting in the forward direction is turned off to transition from the first period to the second period; and
a fourth pattern in which the eighth switching element conducting in the forward direction is turned off to transition from the first period to the second period.

2. The power conversion device according to Claim 1,
wherein the control circuit generates each of the first pattern to the fourth pattern twice for every four switching cycles.

3. The power conversion device according to Claim 1,
wherein the control circuit performs control such that the respective numbers of occurrences of the first pattern to the fourth pattern differ from each other.

4. The power conversion device according to Claim 1,
wherein in the first period of the first pattern, the first switching element, the fourth switching element, and the seventh switching element are in an ON state, and the fifth switching element is in a rectification state,
wherein in the second period of the first pattern, the first switching element and the fourth switching element are in an ON state, and the fifth switching element and the eighth switching element are in a rectification state,
wherein in the first period of the second pattern, the second switching element, the third switching element, and the fifth switching element are in an ON state, and the seventh switching element is in a rectification state,
wherein in the second period of the second pattern, the second switching element and the third switching element are in an ON state, and the sixth switching element and the seventh switching element are in a rectification state,
wherein in the first period of the third pattern, the first switching element, the fourth switching element, and the sixth switching element are in an ON state, and the eighth switching element is in a rectification state,
wherein in the second period of the third pattern, the first switching element and the fourth switching element are in an ON state, and the fifth switching element and the eighth switching element are in a rectification state,
wherein in the first period of the fourth pattern, the second switching element, the third switching element, and the eighth switching element are in an ON state, and the sixth switching element is in a rectification state, and
wherein in the second period of the fourth pattern, the second switching element and the third switching element are in an ON state, and the sixth switching element and the seventh switching element are in a rectification state.

5. The power conversion device according to Claim 1,
wherein the control circuit:
when transmitting power from the first DC section to the second DC section during a switching period between the stepping up and the stepping down, performs control so as to include: the first period; the second period; and a third period in which both ends of the primary winding of the isolation transformer are short-circuited within the first bridge circuit while the second bridge circuit causes the secondary winding of the isolation transformer to be electrically connected to the second DC section.

6. The power conversion device according to Claim 4,
wherein the control circuit:
supplies drive signals with a duty cycle fixed at 50% to the first switching element and the fourth switching element;
supplies drive signals with a duty cycle fixed at 50% to the second switching element and the third switching element; and
fixes a first phase difference between the phase of the drive signals supplied to the first switching element and the fourth switching element and the phase of the drive signals supplied to the second switching element and the third switching element at 180°.

7. The power conversion device according to Claim 4,
wherein the control circuit:
supplies, to the fifth switching element to the eighth switching element, respective drive signals different from each other, each having a duty cycle that varies according to the amount of power transmission; and
controls a second phase difference between turn-on timings of drive signals supplied to one diagonal pair of switching elements among the fifth switching element to the eighth switching element and turn-on timings of the first switching element to the fourth switching element according to the amount of power transmission.

8. The power conversion device according to Claim 7,
wherein the control circuit:
fixes the duty cycle of a drive signal supplied to one switching element of the one diagonal pair of switching elements at 50% and decreases the duty cycle of a drive signal supplied to the other switching element of the pair of switching elements from 50% by an amount corresponding to the second phase difference; and
decreases, from 50%, a duty cycle of a drive signal supplied to one switching element of the other diagonal pair of switching elements among the fifth switching element to the eighth switching element by an amount corresponding to the second phase difference, and increases, from 50%, a duty cycle of a drive signal supplied to the other switching element of the diagonal pair of switching elements by the amount corresponding to the second phase difference.

9. The power conversion device according to Claim 4,
wherein the control circuit controls a switching element included in the second bridge circuit, which is to be in a rectification state, to be in an ON state.

10. The power conversion device according to Claim 4,
wherein the control circuit controls a diagonal pair of switching elements of the second bridge circuit included in the second bridge circuit, which is to be in a rectification state in the second period, to be in an ON state and turns off at least one of the diagonal pair of switching elements when an absolute value of a current flowing through the isolation transformer becomes equal to or less than a predetermined threshold.

11. The power conversion device according to Claim 10,
wherein the control circuit calculates, by using a first derivation equation, a period T2s for controlling a diagonal pair of switching elements included in the second bridge circuit to be in an ON state during the second period; and
wherein the first derivation equation is: $T 2 s = \left(V1⋅T1/\left(V2-V1\right)\right) - \left(L/\left(V2-V1\right)⋅Ith\right)$
where:
V1 is a voltage of the first DC section;
V2 is a voltage of the second DC section;
T1 is a duration of the first period based on feedback control;
L is an inductance between the first bridge circuit and the second bridge circuit; and
Ith is the predetermined threshold.

12. The power conversion device according to Claim 5,
wherein, in the third period, the control circuit controls a diagonal pair of switching elements included in the second bridge circuit, which is to be in a rectification state, to be in an ON state and turns off at least one of the diagonal pair of switching elements when an absolute value of a current flowing through the isolation transformer becomes equal to or less than a predetermined threshold.

13. The power conversion device according to Claim 12,
wherein the control circuit calculates, by using a second derivation equation, a period T3s for controlling a diagonal pair of switching elements included in the second bridge circuit to be in an ON state during the third period; and
wherein the second derivation equation is: 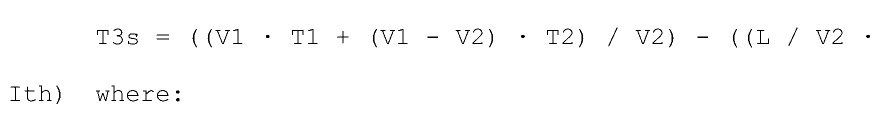 T3s = ((V1 · T1 + (V1 - V2) · T2) / V2) - ((L / V2 · Ith)where:
V1 is a voltage of the first DC section;
V2 is a voltage of the second DC section;
T1 is a duration of the first period based on feedback control;
T2 is a duration of the second period;
L is an inductance between the first bridge circuit and the second bridge circuit; and
Ith is the predetermined threshold.

14. The power conversion device according to Claim 1,
wherein the control circuit swaps drive signals supplied to the first switching element to the fourth switching element with drive signals supplied to the fifth switching element to the eighth switching element when stepping up and transmitting power from the second DC section to the first DC section.
